# DEMANDE DE BREVET EUROPEEN

(11) **EP 1 375 113 A1**
(43) Date de publication de la demande: **02.01.2004**
(21) Numéro de dépôt: 02291535.9
(22) Date de dépôt: 19.06.2002
(51) Int. Cl.: B29C 59/00, B65D 75/58

(54) **Procédé de fabrication d'emballage prédécoupé**

(71) Demandeur: MARS, INCORPORATED, McLean, Virginia 22101-3883 (US)
(72) Inventeur: Boutron, Joel, 18410 Argent/Sauldre (FR); Blanchard, Daniel, 45510 Neuvy en Sullias (FR)
(74) Mandataire: Cabinet Hirsch

(57) **Abrégé**

Le dispositif permet de réaliser au moins une ligne de prédécoupe dans au moins une couche externe en matière plastique d'un film (10). Il comprend une surface d'appui pour le film (10) et au moins une saillie (52a, 52b) pour former la ligne de prédécoupe par pénétration de la saillie dans ladite couche en matière plastique (12) lorsque le film (10) est en position contre ladite surface d'appui. Les saillies peuvent être agencées sous forme de filets sur un ou plusieurs rouleaux (51a, 51b) coaxiaux. Les saillies peuvent former la ligne de prédécoupe par fluage ultrasonore, le film étant comprimé entre une sonotrode et le les rouleaux.

L'invention propose des procédés utilisant ces dispositifs. Elle propose aussi des films présentant des lignes de prédécoupe, ainsi que des emballages présentant des lignes de prédécoupe.

## Description

La présente invention concerne un dispositif pour réaliser au moins une ligne de prédécoupe dans au moins une couche externe en matière plastique d'un film L'invention concerne aussi un procédé pour réaliser au moins une ligne de prédécoupe uniquement dans une première couche en matière plastique d'un film comprenant au moins une deuxième couche. L'invention concerne aussi un procédé de fabrication d'un emballage. L'invention porte aussi sur un film et un emballage présentant une ligne de prédécoupe.

L'invention trouve une application particulièrement avantageuse dans la réalisation de pochons (couramment désigné en anglais par « pouches ») ou sachets contenant des matières alimentaires, notamment des matières alimentaires pour animaux, de tels pochons ou sachets étant destinés à être fermés hermétiquement par soudure, traités thermiquement après leur remplissage et leur fermeture.

Actuellement, de tels emballages présentent des formes diverses. Ils peuvent être plats à trois ou quatre soudures, ou à soufflet avec trois côtés soudés ou trois côtés soudés et un fond soudé en forme de soufflet. De tels emballages peuvent également comporter deux soufflets latéraux ou deux soufflets positionnés en haut et en bas de l'emballage avec des bords latéraux soudés.

Ces emballages peuvent être stérilisés en étant chauffés en ambiance humide et sous pression. Pour résister à un tel traitement thermique, ils sont réalisés à partir d'un ou plusieurs film(s) de structure particulière.

Plus particulièrement, ils sont généralement fabriqués à partir d'un ou plusieurs film(s), chaque film comprenant une couche supérieure et une couche inférieure destinées à constituer les faces externe et interne desdits emballages, réalisées en matière plastique, et une couche centrale prise en sandwich entre lesdites couches supérieure et inférieure réalisées en métal léger. Généralement, la couche supérieure est une couche de polyéthylène téréphtalate associée ou non à une couche de polyamide. La couche centrale est réalisée en aluminium et la couche inférieure est une couche de polypropylène associée ou non à une couche de polyamide. Entre chaque couche, il est prévu une enduction d'adhésif permettant de lier les différentes couches entre elles par exemple par lamination.

En outre, la couche de polyéthylène téréphtalate peut être imprimée sur sa face intérieure et/ou sa face extérieure. Ainsi, la couche de polyéthylène téréphtalate sert généralement de support d'impression et donne l'aspect extérieur de l'emballage.

La couche centrale en aluminium forme une barrière au gaz, notamment à l'oxygène et à la vapeur d'eau, pour isoler de l'extérieur les matières contenues à l'intérieur de l'emballage. Cette couche centrale est fragile en raison de sa faible épaisseur ; elle est protégée par les couches inférieure et supérieure.

La couche de polyamide constitue une couche anti-perforation quand cela est nécessaire en fonction des applications ultérieures de l'emballage, et la couche de polypropylène sert d'agent soudant pour la confection de l'emballage, donne la tenue mécanique générale de l'emballage et assure l'étanchéité au niveau des soudures dudit emballage.

De tels emballages peuvent notamment contenir des solides à caractère humide, des liquides, ou encore une association de solides et de liquides.

Certains emballages peuvent comporter sur leurs bords latéraux une encoche d'amorce de déchirure. Cette encoche est alors réalisée dans une soudure latérale de l'emballage et permet d'ouvrir par déchirure celui-ci.

Ces emballages déjà connus présentent certains inconvénients, notamment liés à leur mode d'ouverture.

En effet, le recours à un outil de découpe du type paire de ciseaux ou couteau manque de praticité, cet outil pouvant par exemple, être sali par le produit contenu à l'intérieur de l'emballage.

Lorsque l'emballage peut être ouvert par déchirure amorcée à l'aide d'une encoche d'amorce de déchirure, la force de déchirure doit être relativement importante et nécessite quelques fois le recours à un outil.

En effet, la force de déchirure d'un film multicouches dépend généralement de la force de déchirure des matériaux constituant l'emballage et de la force d'adhésion entre les différentes couches constituant ledit emballage, forces qui peuvent être altérées après traitement de conservation de celui-ci.

La direction de déchirure se propage généralement dans les flancs de l'emballage de façon non orientée. Ainsi, on obtient alors soit une ouverture partielle de l'emballage, soit une déchirure sous le niveau du produit contenu dans l'emballage ce qui provoque un écoulement non souhaité de ce produit.

Pour essayer de pallier aux inconvénients précités, liés principalement à l'ouverture de ces emballages, il a déjà été proposé des emballages qui comportent sur les faces externes de leurs flancs, une prédécoupe réalisée au laser. De tels emballages sont notamment décrits dans les documents EP-A-540184 et EP-A-473 517. Cette prédécoupe effectuée par application d'un faisceau laser sur la face externe des flancs de l'emballage, présente cependant comme principal inconvénient, d'altérer l'aspect externe de l'emballage une fois réalisé.

On connaît aussi du document US-A-5 000 321 un emballage qui comprend sur ses faces externe et interne des zones d'affaiblissement réalisées au moyen d'un faisceau laser. Ces zones d'affaiblissement sont obtenues par un amincissement des couches constituant les faces externe et interne dudit emballage.

En outre, le document EP-A-954 474 propose un emballage avec une ligne de prédécoupe sous forme de perforation(s) de la ou des couches internes en matière plastique du film réalisée(s) au laser. Les perforations s'étendent jusqu'au niveau de la couche en aluminium ou autre métal léger sans l'entamer, cette couche réfléchissant le faisceau laser durant l'opération de perforation au laser des couches internes en matière plastique.

Bien que la technologie proposée par ce document soit satisfaisante, elle est néanmoins dépendante de la présence du film en métal.

De façon plus générale, les technologies recourant au laser présentent un coût d'investissement important, mais aussi un coût d'exploitation important lié à la maintenance des outils lasers et à la vitesse de production limitée de ces technologies. De plus, leur mise en oeuvre en l'absence de couche intermédiaire métallique est très délicate.

Le but de la présente invention est de proposer une technologie alternative à celles connues dans l'art antérieur pour réaliser des lignes de prédécoupe dans les emballages souples procurant une ouverture dirigée et nette de l'emballage.

L'invention vise notamment à proposer une technologie alternative présentant un investissement financier moindre, qui soit d'une exploitation plus économique notamment en permettant une vitesse de production plus élevée en comparaison des technologies recourant au laser.

L'invention vise encore à fournir une technologie apte à réaliser des lignes de prédécoupe dans les couches internes en matière plastique du film constituant l'emballage souple même dans le cas où le film ne comprend pas de couche métallique, tout en étant de mise en oeuvre simple.

L'invention a trait avant tout, mais non seulement, aux emballages souples, notamment sous forme de pochons, destinés à subir un traitement de conservation tels que ceux destinés à contenir des produits alimentaires liquides ou solides de type humide, en particulier des aliments humides pour animaux.

A cette fin, la présente invention propose un dispositif pour réaliser au moins une ligne de prédécoupe dans au moins une couche externe en matière plastique d'un film, comprenant :
- une surface d'appui pour le film ; et
- au moins une saillie pour former la ligne de prédécoupe par pénétration de la saillie dans ladite couche en matière plastique lorsque le film est en position contre ladite surface d'appui.

La ligne de prédécoupe ainsi réalisée peut être sous la forme d'un sillon continu ou discontinu. Par sillon discontinu, on entend une succession de sillons ou de trous borgnes.

Elle peut le cas échéant être réalisée sous forme de perforations successives.

La saillie est de préférence agencée sur un support, la ligne de prédécoupe étant formée par défilement relatif du film par rapport au support.

La saillie peut être apte à inciser la couche en matière plastique.

La saillie peut aussi provoquer le fluage de la matière plastique de ladite couche le long de la ligne de prédécoupe pour former une excroissance sur ladite couche le long d'au moins un côté de la ligne de prédécoupe. Préférentiellement, la saillie provoque la formation d'un bourrelet sur la surface de ladite couche en matière plastique le long de chaque côté de la ligne de prédécoupe, un desdits bourrelets étant au moins 30 %, de préférence au moins 50%, plus avantageusement au moins 100 % plus haut par rapport à l'autre desdits bourrelets. Bien entendue, si la ligne de prédécoupe est de type discontinu, le bourrelet peut aussi être discontinu. Avantageusement, la saillie provoque la formation d'un bourrelet sur la surface de ladite couche en matière plastique uniquement le long d'un côté de la ligne de prédécoupe. La saillie peut notamment présenter une section asymétrique. Préférentiellement, la saillie provoque le fluage de la matière plastique en coopération avec des ultrasons. Pour cela, le dispositif peut comprendre un enclume, et une sonotrode pour appliquer des vibrations ultrasonores au film lorsque le film est comprimé entre la sonotrode et l'enclume, la saillie étant agencée sur ledit enclume. La saillie peut avoir avantageusement une forme allongée rectiligne dans la direction du défilement du film, la largeur et/ou la hauteur de la saillie augmentant de préférence dans le sens du défilement du film. De plus, la saillie peut présenter une section ayant un sommet plat parallèle à la surface d'appui.

Ledit support peut être un rouleau monté à rotation, la saillie étant agencée sur la circonférence du rouleau. Dans ce cas, la saillie peut être agencée sur la circonférence d'une bague, ladite bague étant montée sur le rouleau. Un jeu peut exister entre la bague et le rouleau pris à température ambiante, un élément de chauffage permettant de serrer la bague sur le rouleau par dilatation. Par ailleurs, la surface d'appui peut être définie par la circonférence d'un deuxième rouleau dont l'axe est parallèle au premier rouleau. Le premier rouleau peut présenter des chemins de roulements sollicités contre le deuxième rouleau.

Selon un autre aspect, l'invention propose un procédé pour réaliser au moins une ligne de prédécoupe uniquement dans une première couche en matière plastique d'un film comprenant au moins une deuxième couche, le procédé comprenant la réalisation de la ligne de prédécoupe dans la première couche du film à l'aide d'un dispositif selon l'invention. On comprendra que la première couche peut éventuellement être définie par plusieurs sous-couches de matières plastiques éventuellement différentes, par exemple du polypropylène et du polyamide.

Selon un mode de réalisation préféré, ladite ligne de prédécoupe est réalisée après assemblage des première et deuxième couches du film.

Selon autre un mode de réalisation préféré, ladite ligne de prédécoupe est réalisée avant assemblage des première et deuxième couches du film.

Selon un autre aspect encore, l'invention propose un procédé de fabrication d'un emballage, pouvant notamment être destiné à subir un traitement de conservation, à partir d'au moins un film présentant une première couche en matière plastique et au moins une deuxième couche, ladite deuxième couche formant la face externe de l'emballage, comprenant :
- la réalisation d'au moins une ligne de prédécoupe dans uniquement ladite première couche du film selon le procédé précité de l'invention, puis
- la confection de l'emballage à partir du film muni de ladite ligne de prédécoupe.

On comprendra là-aussi que la première couche peut éventuellement être définie par plusieurs sous-couches de matières plastiques éventuellement différentes, par exemple du polypropylène et du polyamide.

Selon un autre aspect encore, l'invention propose un film comprenant au moins une couche en matière plastique présentant une ligne de prédécoupe, ladite couche en matière plastique formant un bourrelet sur sa surface le long :
- d'un seul côté de la ligne de prédécoupe, ou
- de chaque côté de la ligne de prédécoupe, un desdits bourrelets étant au moins 30 %, de préférence au moins 50%, plus avantageusement au moins 100 % plus haut par rapport à l'autre desdits bourrelets.

Bien entendue, si la ligne de prédécoupe est de type discontinu, le bourrelet peut aussi être discontinu.

Selon un autre aspect encore, l'invention propose un film comprenant au moins une couche en matière plastique dans laquelle est ménagée :
- un sillon formant une ligne de prédécoupe, ou éventuellement
- une succession de perforations dans le cas où le film comprend au moins une autre couche,
le sillon ou les perforations étant réalisés sans enlèvement de matière de ladite couche.

Le sillon peut être de type continu ou discontinu.

Selon encore un autre aspect, l'invention porte sur un emballage, pouvant notamment être destiné à subir un traitement de conservation en particulier après son remplissage et sa fermeture, comportant au moins un flanc souple, ledit flanc souple comprenant une couche en matière plastique dans laquelle est ménagée :
- un sillon formant une ligne de prédécoupe, ou éventuellement
- une succession de perforations dans le cas où le film comprend au moins une autre couche,
le sillon ou les perforations étant réalisés sans enlèvement de matière de ladite couche.

Le sillon peut notamment correspondre à au moins une incision.

Selon encore un autre aspect, l'invention porte sur un emballage, pouvant notamment être destiné à subir un traitement de conservation en particulier après son remplissage et sa fermeture, comportant au moins un flanc souple, ledit flanc souple comprenant une couche en matière plastique dans laquelle est ménagé un sillon formant une ligne de prédécoupe, ladite couche en matière plastique formant un bourrelet sur sa surface le long :
- d'un seul côté de la ligne de prédécoupe, ou
- de chaque côté de la ligne de prédécoupe, un desdits bourrelets étant au moins 30 %, de préférence au moins 50%, plus avantageusement au moins 100 % plus haut par rapport à l'autre desdits bourrelets.

Si la ligne de prédécoupe est de type discontinu, le bourrelet peut aussi être discontinu.

Le bourrelet peut être fait de matière fluée hors du sillon ménagé dans ladite couche.

De façon avantageuse, un deuxième sillon formant une deuxième ligne de prédécoupe est ménagé dans ladite couche, le deuxième sillon s'étendant à distance le long du premier sillon, dans lequel l'unique bourrelet ou le bourrelet le plus haut de chacun des sillons est agencé le long du sillon du côté opposé à l'autre sillon. Les deux lignes de prédécoupe sont de préférence distantes de 2 à 5 millimètres. Elles sont avantageusement parallèles.

Pour les différents emballages selon l'invention, il est avantageux que la ligne de prédécoupe soit ménagée dans la face du flanc vers l'intérieur de l'emballage. Par ailleurs, le flanc peut comprendre une couche en métal léger tel que de l'aluminium. Ladite couche en matière plastique est préférentiellement en polypropylène. Par ailleurs, l'emballage peut comprendre un deuxième flanc souple, le premier et le deuxième flanc étant liés par leurs bords latéraux et comprenant de préférence des soudures sur les bords latéraux.

Lors de l'ouverture de l'emballage suivant l'invention, la déchirure se propage le long de la ligne de prédécoupe ainsi réalisée. On a alors une ouverture dirigée et nette de l'emballage.

Dans le cadre de la présente invention, on entendra par traitement de conservation, tout traitement connu de l'homme de l'art, cil particulier des traitements thermiques tels qu'une stérilisation conventionnelle, flash stérilisation et pasteurisation.

D'autres caractéristiques et avantages de l'invention apparaîtront à la lecture de la description qui suit de modes de réalisation préférés de l'invention, donnée à titre d'exemple et en référence au dessin annexé.

La figure 1 est une vue de détail d'une partie d'un film à partir duquel peut être réalisé un emballage selon l'invention.

La figure 2 est une vue en perspective d'un dispositif selon l'invention pour réaliser des lignes de prédécoupe dans un film.

La figure 3 est une vue de face du dispositif de la figure 1, son rouleau de découpe étant vu en section longitudinale.

La figure 4 est une vue de dessus du rouleau de découpe du dispositif de la figure 1.

La figure 5 est une section longitudinale de la bague de découpe destinée à être montée sur le rouleau de découpe du dispositif de la figure 2.

La figure 6 est une section longitudinale schématique prise localement au niveau d'un des filets du rouleau de découpe du dispositif de la figure 2 lorsque le film est présent.

La figure 7 illustre schématiquement le chemin du film passant dans le dispositif de la figure 2.

La figure 8 est une section longitudinale schématique prise localement au niveau d'un des filets du rouleau de découpe du dispositif de la figure 2 selon une variante.

La figure 9 est un schéma illustrant un perfectionnement de la figure 1.

La figure 10 est une vue schématique en perspective d'un autre dispositif selon l'invention pour réaliser des lignes de prédécoupe dans un film.

La figure 11 est une vue en perspective d'une molette du dispositif de la figure 10.

La figure 12a est une section axiale de la molette de la figure 10, limitée à la zone des filets circonférentiels.

La figure 12b est une section axiale montrant le film disposé entre la molette et la sonotrode, la figure 12c montrant un agrandissement local au niveau du filet formant la prédécoupe.

Les figures 13a et 13b montrent respectivement une vue en perspective d'une portion de la circonférence de la molette et une section radiale de la molette au niveau d'un filet, dans le cas où les filets de la molette sont réalisés sous forme de dents pour former des sillons discontinus dans le film.

Les figures 14a et 14b montrent respectivement une vue en perspective d'une portion de la circonférence de la molette et une section radiale de la molette au niveau d'un filet, dans le cas où les filets de la molette sont continus pour former des sillons continus dans le film.

La figure 15 est une vue schématique en perspective d'une variante au dispositif de la figure 10.

Les figures 16 et 17 sont des vues en perspective d'un sabot du dispositif de la figure 15, la figure 16 en présentant un agrandissement.

Les figures 18a à 18c représentent chacune une section droite du sabot de la figure 17 prise en trois endroits différents sur la longueur du sabot.

La figure 19 montre une section verticale du dispositif le long d'un filet du sabot.

La figure 20 montre une section du dispositif suivant la ligne de coupe A-A définie sur la figure 19, la figure 21 présentant un agrandissement local au niveau d'un filet du sabot.

Les figures 22a et 22b sont des vues respectivement de face et en coupe de côté, d'un emballage du type sachet plat.

Les figures 23a et 23b sont des vues respectivement de face et en coupe de côté d'un autre emballage du type sachet plat.

Les figures 24a et 24b représentent des vues respectivement de face et en coupe de côté d'un emballage du type sachet à un soufflet.

Les figures 25a, 25b et 25c représentent un autre emballage du type sachet à un soufflet, respectivement vu de face, en coupe de côté et vu de trois quarts en perspective.

Les figures 26a, 26b et 26c représentent respectivement vu de face, en coupe selon le plan A-A et en vue schématique de trois quarts en perspective, un emballage du type sachet à deux soufflets latéraux.

La figure 27a est une vue en perspective de trois quarts d'un mode de réalisation d'un emballage selon l'invention, à l'état fermé.

La figure 27b est une vue en perspective de trois quarts de l'emballage de la figure 8a, à l'état demi ouvert.

La figure 28a est une vue de détail d'un bord soudé de l'emballage de la figure 8a.

La figure 28b est une vue de détail d'un bord soudé d'une variante de réalisation de l'emballage selon l'invention.

La figure 29 est une vue schématique d'un dispositif de mise en oeuvre du procédé selon l'invention.

La figure 30 est une vue schématique d'un autre dispositif de mise en oeuvre du procédé selon l'invention.

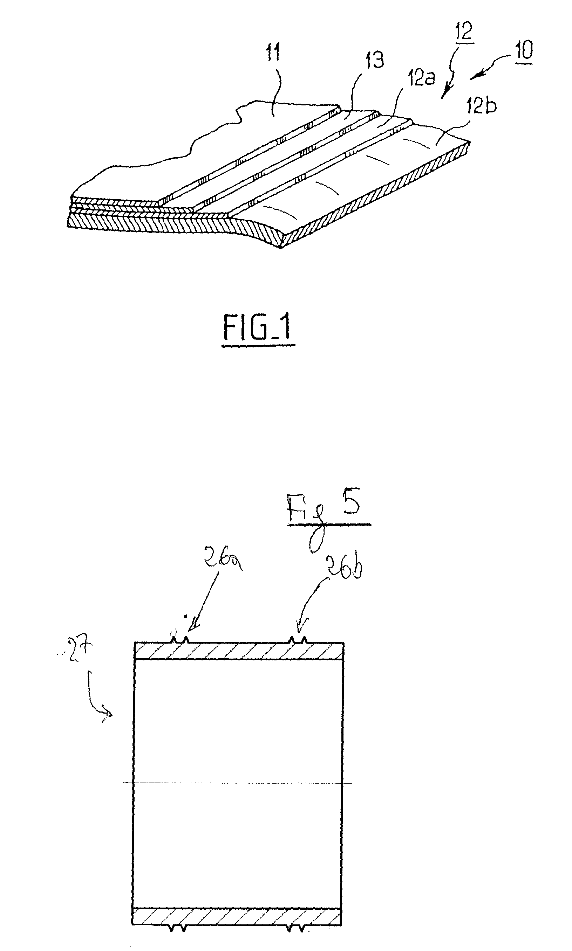

La figure 1 illustre une structure de film typiquement utilisé pour la fabrication d'emballages, notamment sous forme de pochons, destinés à contenir des aliments notamment pour animaux. Pour cette raison, ils doivent classiquement résister à une stérilisation en ambiance humide et sous pression.

Comme on peut le voir sur cette figure, ce film 10 comporte trois couches 11, 12, 13, à savoir une couche supérieure 11 et une couche inférieure 12 en matière plastique et une couche centrale 13 en métal léger prise en sandwich entre lesdites couches supérieure 11 et inférieure 12. La couche supérieure 11 constitue la face externe des emballages tandis que la couche inférieure 12 constitue leur face interne.

La couche inférieure 12 peut en fait comprendre une ou plusieurs couches successives de matières plastiques éventuellement différentes les unes des autres, chacune pouvant remplir une fonction spécifique. Il peut en être de même de la couche supérieure 11.

Dans l'exemple illustré par la figure 1, la couche supérieure 11 constituant la face externe de l'emballage, est réalisée en polyéthylène téréphtalate, la couche centrale 13 est en aluminium et la couche inférieure 12 constituant la face interne de l'emballage comprend successivement une couche de polyamide 12a - préférentiellement du polyamide orienté - et une couche de polypropylène 12b.

La couche en polyéthylène téréphtalate définissant la face externe de l'emballage sert de support d'impression et permet de conférer à l'emballage ainsi réalisé, son aspect extérieur, aspect brillant ou mat par exemple.

La couche centrale 13 réalisée en aluminium, forme une barrière au gaz externe, notamment à l'oxygène et à la vapeur d'eau, pour isoler de façon efficace la matière alimentaire contenue dans l'emballage.

La première couche 12a de la couche inférieure 12 du film 10 est ici réalisée en polyamide qui permet de renforcer mécaniquement l'emballage et éviter les perforations par l'extérieur. La deuxième couche 12b en polypropylène, sert d'agent soudant pour permettre la soudure des bords de l'emballage. Le polypropylène confère aussi une certaine tenue mécanique à l'emballage et assure une bonne étanchéité des soudures.

En variante, on peut prévoir que la couche supérieure 11 du film constituant la face externe des flancs de l'emballage comprend une succession de deux couches, une couche externe en polyéthylène téréphtalate et une couche interne en polyamide, la couche centrale 13 restant en aluminium. Dans ce cas, la couche inférieure 12 constituant la face interne des flancs dudit emballage, est réalisée préférentiellement uniquement en polypropylène.

Selon une autre variante, la couche extérieure 11 du film constituant la face externe de l'emballage est réalisée uniquement en polyéthylène téréphtalate, la couche centrale 13 en aluminium, et la couche inférieure 12 du film constituant la face interne de l'emballage, est réalisée uniquement en polypropylène.

De manière générale, la couche de polyéthylène téréphtalate présente une épaisseur comprise environ entre 10 et 20 µm, la couche de polyamide présente une épaisseur comprise également entre 10 et 20 µm, la couche centrale en aluminium présente une épaisseur comprise environ entre 7 et 12 µm, et la couche de polypropylène présente une épaisseur comprise entre 30 et 100 µm.

Classiquement, entre chaque couche dudit film 10, il est prévu une enduction d'adhésif pour permettre la solidarisation entre elles desdites couches le constituant grâce à une opération de lamination.

L'invention concerne en particulier la fabrication d'emballage à partir d'un ou plusieurs film(s) notamment du type de ceux décrits en relation avec la figure 1.

Pour la description de l'invention qui suit, nous nous référerons au film 10 précité présentant une couche extérieure 11 - constituant la face externe de l'emballage - réalisée uniquement en polyéthylène téréphtalate, une couche centrale 13 en aluminium, et une couche inférieure 12 - constituant la face interne de l'emballage - réalisée uniquement en polypropylène. Mais bien entendu, l'invention peut être mise en oeuvre avec n'importe quelle structure de film précédemment décrite. Plus généralement, elle est applicable à tout film présentant au moins une couche en matière plastique.

Selon l'invention, la ou les lignes de prédécoupe sont préférentiellement réalisées dans le film préalablement aux opérations de confection de l'emballage à partir de ce film. Les opérations de confection de l'emballage à partir du film sont connues en soi.

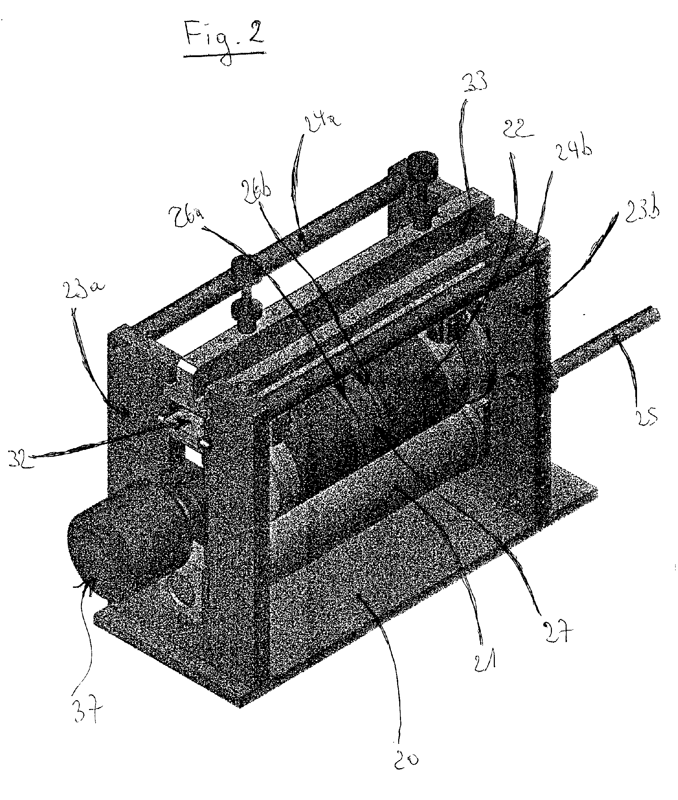

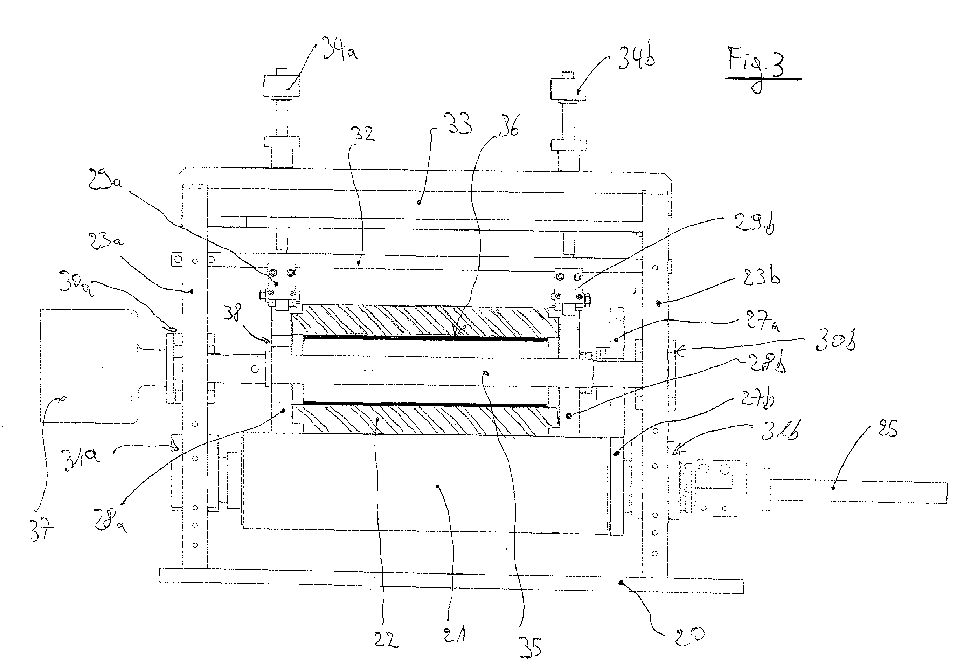

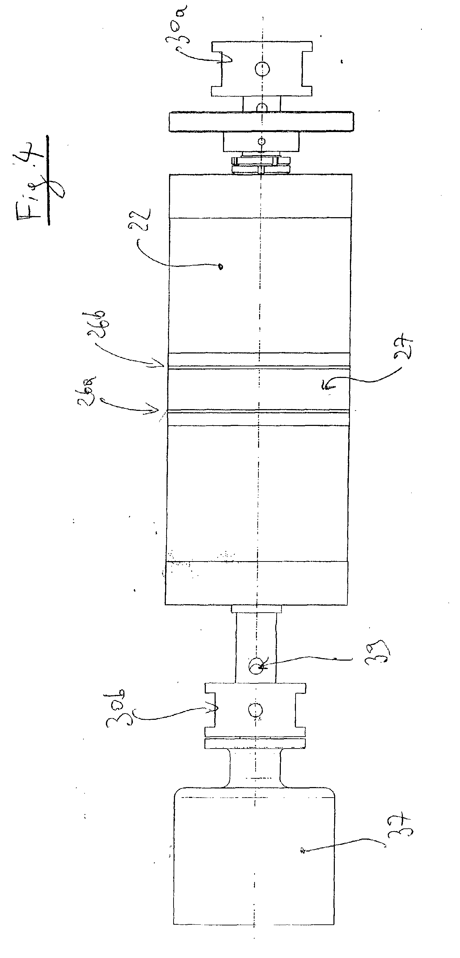

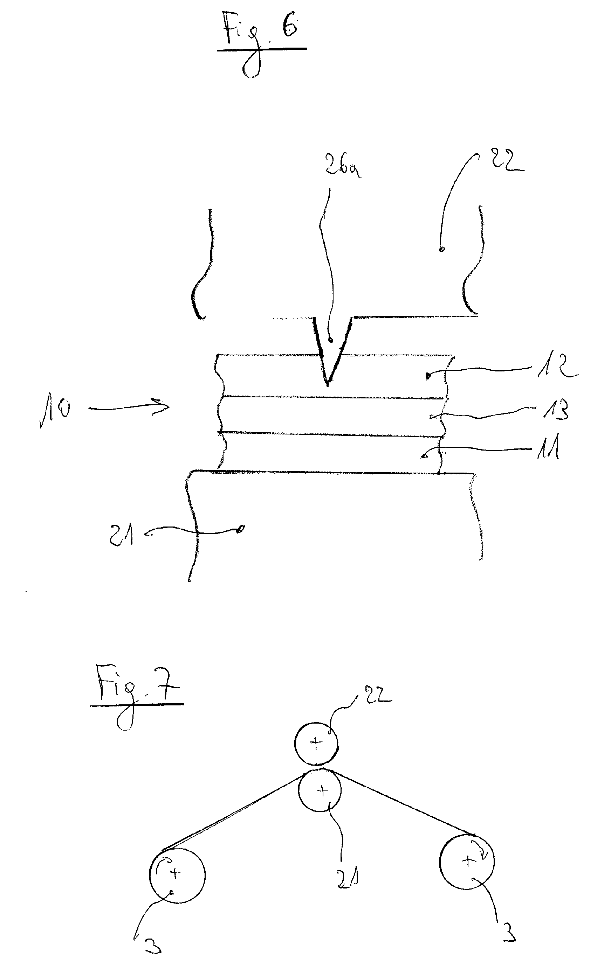

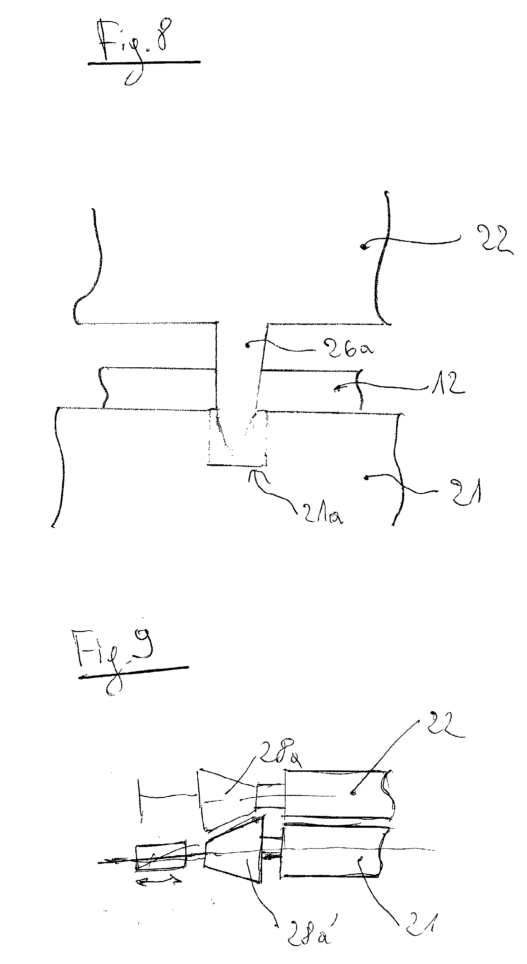

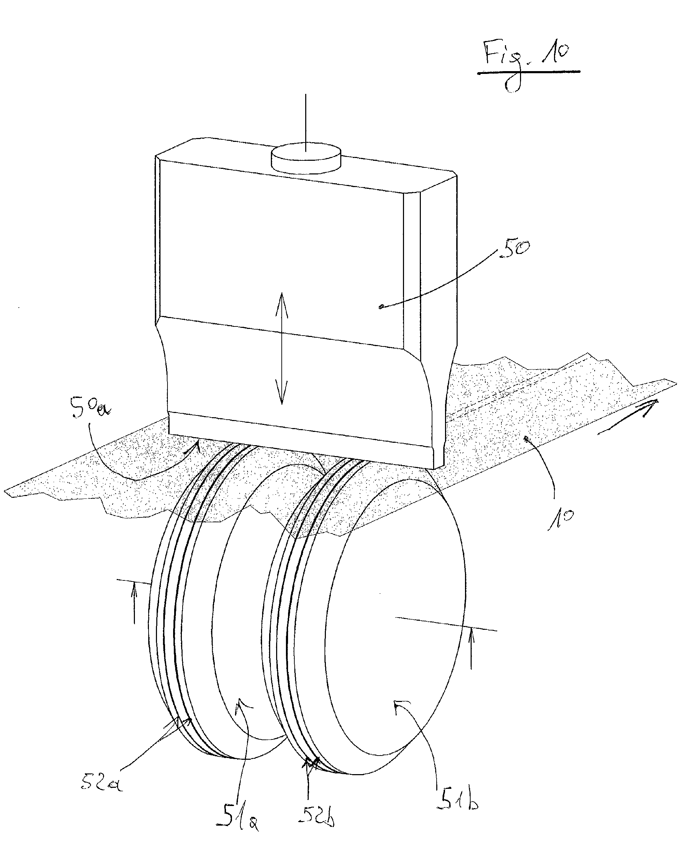

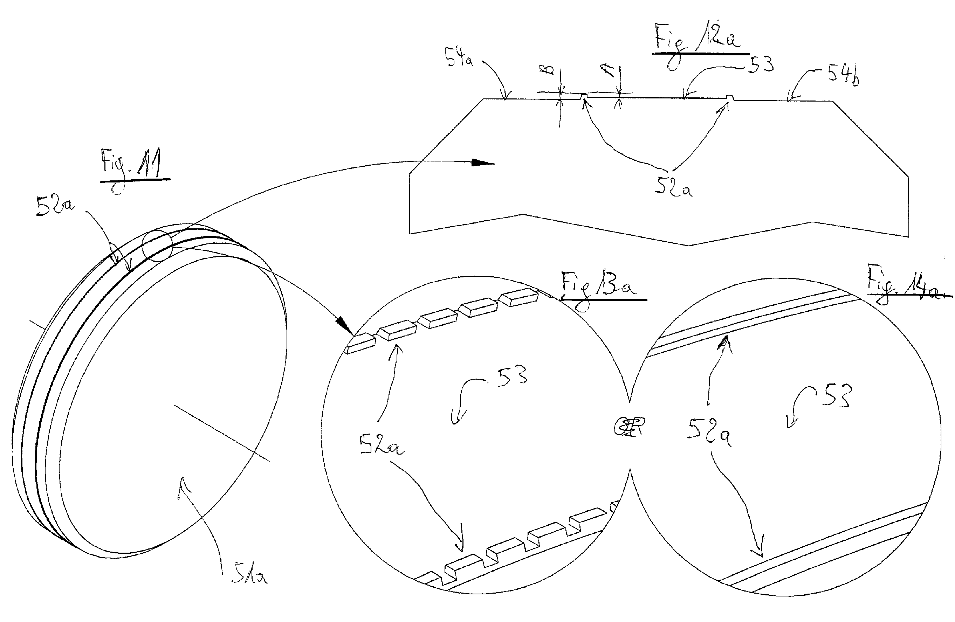

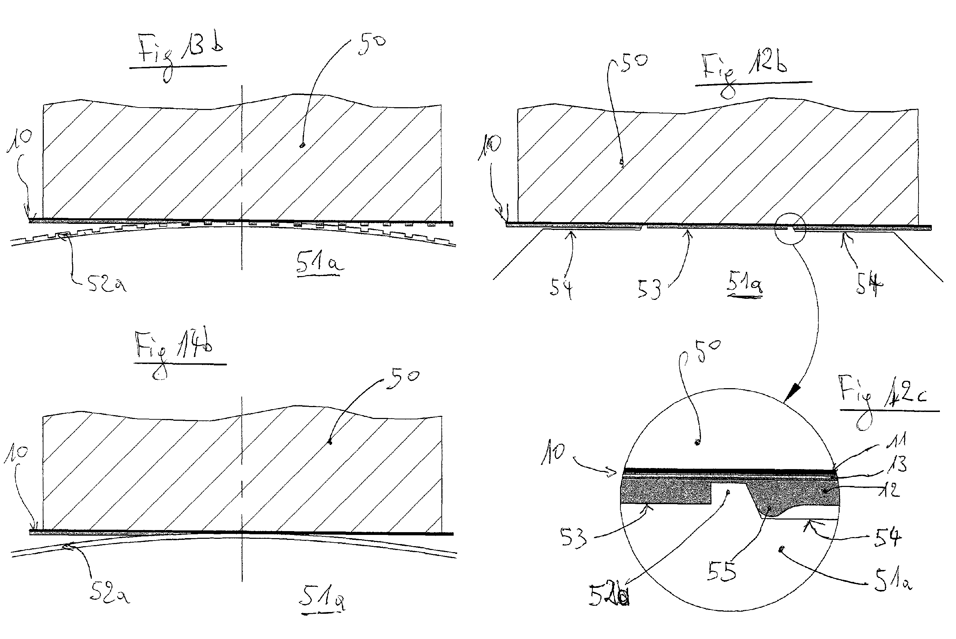

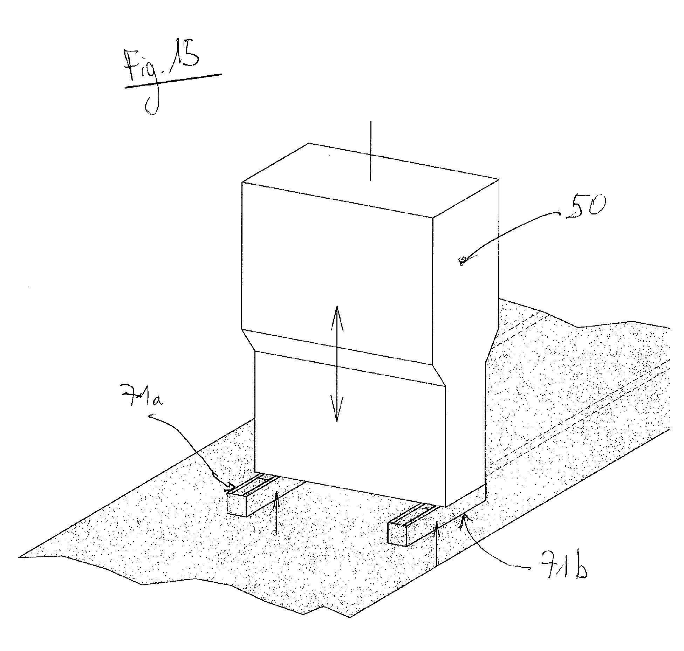

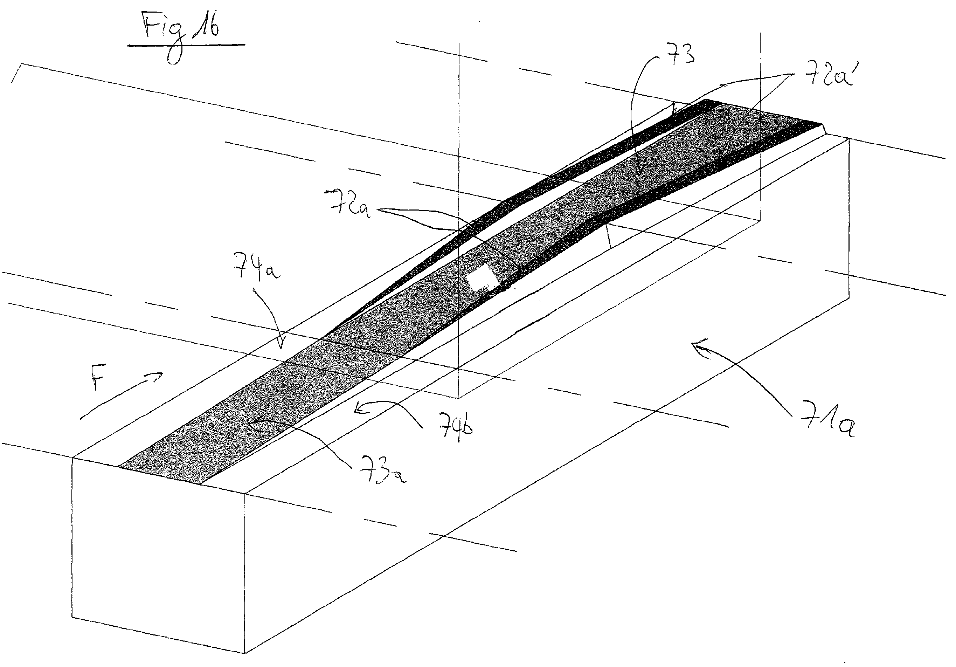

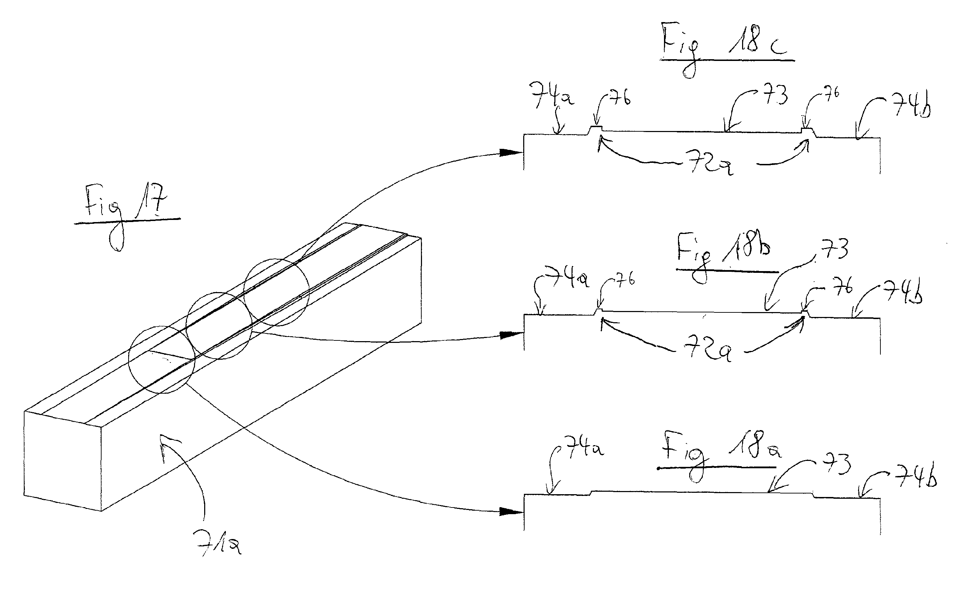

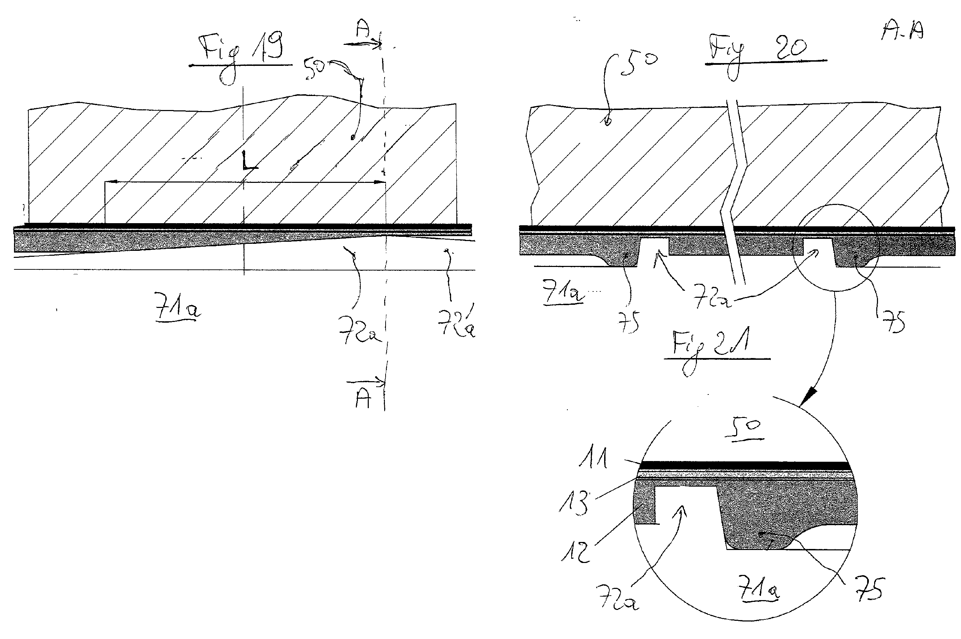

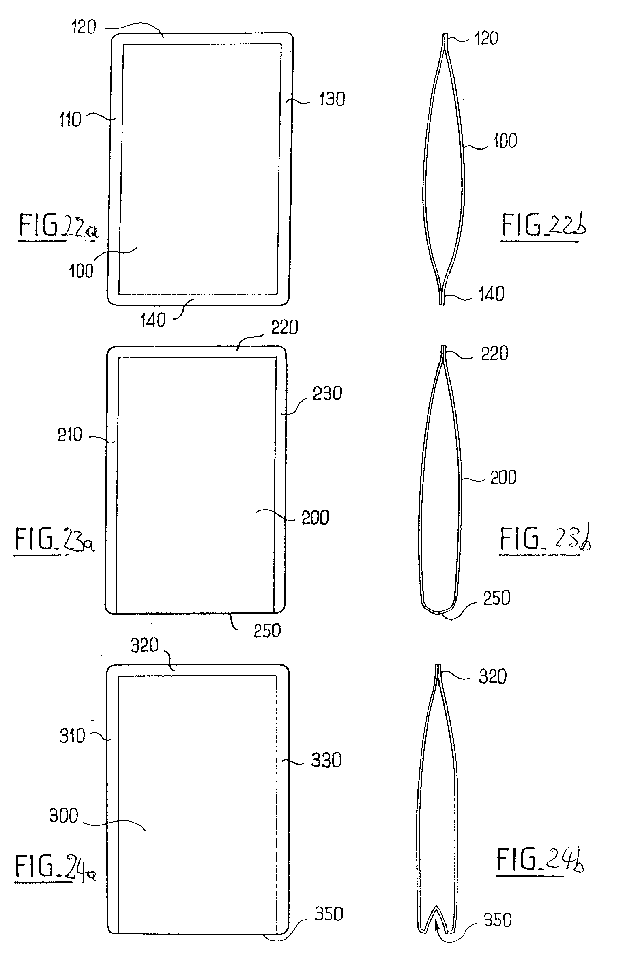

Les figures 2 à 5 illustrent un dispositif selon l'invention permettant de réaliser au moins une ligne de prédécoupe dans un film.

Le dispositif comprend un rouleau de référence 21 de forme cylindrique et un rouleau de découpe 22 également de forme cylindrique. Les axes des rouleaux 21 et 22 sont parallèles.

Les rouleaux 21 et 22 sont montés à rotation par exemple entre deux montants latéraux 23a, 23b d'un bâti 20. Des poutres 24a, 24b peuvent relier les parties supérieures des montants 23a, 23b pour rigidifier l'ensemble.

Lors de l'opération de prédécoupe, le film 10 passe entre les deux rouleaux 21 et 22.

Le rouleau de référence 21 sert de surface d'appui au film 10. Plus précisément, c'est 1a couche supérieure 11 du film 10 qui prend appui sur le rouleau 21.

Le rouleau de découpe 22 présente quatre filets 26a, 26b agencés sur sa circonférence. Ils ne sont pas représentées sur la figure 3 dans un souci de clarté de cette figure. Ces filets 26a, 26b forme donc des saillies sur la surface circonférentielle du rouleau 22. Chaque filet est localisé dans un plan radial respectif autour du rouleau 22.

Chacun des filets 26a, 26b est prévu pour couper dans la couche inférieure 12 du film 10 - c'est-à-dire la couche formant la face intérieure des flancs du pochon - pour y former un sillon correspondant au fur et à mesure du défilement du film 10 entre les rouleaux 21 et 22. Chaque sillon a pour effet de fragiliser en cet endroit le film 10 et forme donc une ligne de prédécoupe.

Les filets 26a, 26b ont de préférence un profil tranchant apte à inciser la couche inférieure 12 du film 10, sans enlèvement de matière. Ainsi, les filets 26a, 26b peuvent présenter une section triangulaire pointue comme illustrée sur la figure 4. La section de chaque filet 26a, 26b est de préférence identique tout autour de la circonférence du rouleau 22. De plus, l'ensemble des filets 26a, 26b présentent de préférence la même section et les mêmes dimensions.

La figure 6 montre une section longitudinale prise localement dans la zone entre le rouleau de découpe 22 et le rouleau de référence 21 au niveau d'un des filets 26a. Comme indiqué, le film 10 repose sur le rouleau de référence 21 alors que le filet 26a a pénétré dans la couche inférieure 12. Le filet 26a ne pénètre que dans une partie de l'épaisseur de la couche inférieure 12 du film 10, mais ne perfore pas cette couche. Ainsi, le filet 26a n'endommage pas la couche 13 en aluminium étant donné la fragilité de celle-ci, et donc elle assurera correctement sa fonction d'étanchéité pour le pochon. Bien entendu, cette description vaut aussi pour les autres filets 26a, 26b non représentés sur la figure 6.

En opération, le rouleau de référence 21 est de préférence entraîné en rotation pour présenter une vitesse tangentielle égale à la vitesse de défilement du film entre les rouleaux 21 et 22. Ainsi, il n'y aura pas de friction entre le film 10 et le rouleau 21. De façon similaire, il est avantageux d'entraîner également le rouleau 22 en rotation pour que les filets 26a, 26b aient une vitesse tangentielle égale à la vitesse de défilement du film entre les rouleaux 21 et 22. Ainsi, il n'y aura pas ou peu d'effet de friction entre les flancs latéraux des filets 26a, 26b et le flancs du sillon qu'ils forment dans la couche inférieure 12 du film 10. Pour cela, il est possible de prévoir un arbre d'entraînement 25 pour entraîner l'un des rouleaux en rotation et un engrenage 27a, 27b pour également transmettre la rotation à l'autre rouleau. En variante, il est possible de prévoir que le rouleau de référence 21 soit monté libre en rotation auquel cas c'est le film 10 qui l'entraînera en rotation. Il peut en être de même pour le rouleau de découpe 22.

En pratique, il est avantageux que les filets 26a, 26b ne soient pas agencés directement sur la surface du rouleau 22, mais plutôt sur une bague 27 qui est montée sur le rouleau 22. De cette façon, il est aisé de changer le nombre de lignes de prédécoupe, leur forme et/ou leur profondeur en remplaçant seulement la bague 27 au lieu du rouleau 22 complet.

Etant donné la faible épaisseur de la couche inférieure 12 du film 10, le dispositif est conçu pour procurer un positionnement précis des filets 26a, 26b par rapport à la surface du rouleau de référence 21 du moins lorsqu'il est important de ne pas perforer cette couche pour éviter de détériorer la couche centrale 13 en aluminium. A cette fin, le rouleau 22 peut être réalisé comme suit.

Le rouleau 22 présente à chaque extrémité un chemin de roulement 28a, 28b qui viennent en appui sur une surface correspondante du rouleau de référence 21. Ce contact permet donc de positionner précisément le rouleau de découpe 22 par rapport au rouleau de référence 21. Pour assurer un bon contact des chemins de roulements 28a, 28b sur le rouleau 21, il est prévu de solliciter les rouleaux 21 et 22 l'un contre l'autre. Ceci peut être obtenu par exemple grâce à des galets presseurs 29a, 29b appuyant sur les chemins de roulement 28a, 28b du côté opposé du rouleau de référence 21. Dans ce cas, le rouleau de découpe 22 est monté à rotation sur les montants latéraux 23a, 23b par l'intermédiaire de paliers 30a, 30b - par exemple des paliers à roulements à billes ou similaires - qui sont avantageusement coulissants verticalement dans les montants 23a, 23b. A cette fin, les paliers 30a, 30b peuvent par exemple être guidés par une rainure verticale ménagée dans les montants latéraux 23a, 23b. Au contraire, le rouleau de référence 21 est monté à rotation sur les montants latéraux 23a, 23b par l'intermédiaire de paliers 31a, 31b - par exemple des paliers à roulements à billes ou similaires - qui sont fixes par rapport au bâti 20 du moins en opération. A cette fin, les paliers 31a, 31b peuvent simplement être en butée au fond de la rainure verticale précitée ménagée dans les montants 23a, 23b. Les galets presseurs 29a, 29b peuvent être monté sur une poutre 32 coulissante par rapport aux montants 23a, 23b. Des vis 34a, 34b vissées à travers une poutre fixe 33 reliant les montants latéraux 23a, 23b, exercent une pression sur la poutre coulissante 32, et par conséquent, les galets presseurs 29a, 29b appuient le rouleau de découpe 22 sur le rouleau de référence 21. Il est avantageux de prévoir un capteur d'effort pour mesurer l'effort exercer par le rouleau de découpe 22 sur le rouleau de référence 21 afin de pouvoir régler cet effort à une valeur souhaitée. Ce capteur d'effort peut comprendre deux capteurs piézoélectriques sur lesquels reposent les paliers 31a, 31b du rouleau de référence 21 au fond de la rainure de guidage des montants latéraux 23a, 23b. Etant donné que les paliers 31a, 31b du rouleau de référence 21 sont fixes dans cet exemple, c'est préférentiellement, le rouleau de référence 21 qui est directement entraîné par l'arbre d'entraînement 25, l'engrenage 27a, 27b transmettant la rotation au rouleau de découpe 22. Bien entendu, le montage décrit pour solliciter les rouleaux 21 et 22 l'un contre l'autre, peut être inversé par rapport aux rouleaux 21 et 22.

Les chemins de roulement 28a, 28b sont de préférence rapportés sur le rouleau 22. A cette fin, ils peuvent être montés avec ajustement sur l'extrémité du rouleau 22. Il est préférable de recourir à un ajustement précis, par exemple un ajustement incertain du type H7g6.

Pour pouvoir positionner précisément les filets 26a, 26b par rapport au rouleau de référence 21, il est avantageux de prévoir un rattrapage des jeux radiaux. Il existe en effet un jeu radial entre les chemins de roulement 28a, 28b et le cas échéant également entre la bague de découpe 27 et le rouleau 22. En effet, pour faciliter le montage de la bague 27 sur le rouleau 22, il est avantageux de prévoir un jeu entre eux. Ces jeux radiaux peuvent être rattrapés en recourant à une dilatation du rouleau de découpe 22.

A cette fin, le rouleau 22 peut être réalisé sous la forme d'un tube creux. Le rouleau 22 est porté par un arbre 35 par l'intermédiaire des chemins de roulement 28a, 28b réalisés chacun sous forme de flasque et rapportés sur les extrémités du rouleau 22 par ajustement comme déjà indiqué. L'arbre 35 porte en outre la roue dentée 27a de l'engrenage transmettant la rotation du rouleau 21 au rouleau 22. Les flasques formant les chemins de roulement 28a, 28b sont montés sur l'arbre 35 de préférence avec un ajustement serré. De la sorte, il n'y a pas de jeu radial supplémentaire à ce niveau. Les flasques formant chemins de roulement 28a, 28b peuvent en outre être solidarisés à l'arbre 35 grâce à une ou plusieurs goupilles radiales.

De préférence, le rouleau 22 est monté sans jeu axial par exemple grâce à un épaulement de l'arbre 35 contre lequel appuie le flasque 28a et un écrou appuyant contre l'autre flasque 28b. Le rouleau de référence 21 est également préférentiellement monté sur le bâti sans jeu axial.

Un élément chauffant 36 est placé à l'intérieur du rouleau 22. Il s'agit avantageusement d'une ou plusieurs résistances chauffantes au mica de forme cylindrique creuse. Pour assurer une bonne transmission de la chaleur au rouleau 22, la ou les résistances sont de préférence plaquées contre sa paroi intérieure. Avantageusement, la ou les résistances sont fendues et un collier expansible - non représenté - placé à l'intérieur de la ou des résistances plaquent celles-ci contre la paroi intérieure du rouleau 22.

Le chauffage du rouleau 36 peut être réglé pour rattraper complètement les jeux radiaux. Il peut être avantageusement réglé pour provoquer un serrage entre la bague 27 et le rouleau 22 et de préférence aussi entre les flasques 28a, 28b et le rouleau 22.

Bien entendu, l'homme du métier choisira les matériaux des pièces en fonction de leur coefficient de dilatation et déterminera les dimensions des pièces et les ajustements à froid pour obtenir le rattrapage de jeux souhaité par rapport à la température atteinte à chaud.

La température à laquelle est portée le rouleau 22 est de préférence inférieure à la température de fusion de la couche inférieure 12 du film 10, en l'occurrence de 160°C. La température à laquelle est portée la surface extérieure du rouleau 22 peut être avantageusement choisie dans l'intervalle allant de 80 à 130°C.

Par ailleurs, il est préférable que seuls les filets 26a, 26b entrent en contact avec le film 10, mais non pas le reste de la surface de la bague 27 ou du rouleau 22 qui est chaude, ceci afin d'éviter un ramollissement éventuel de la couche inférieure 12 du film 10.

Il est avantageux de prévoir une régulation de température du rouleau 22 utilisant par exemple un gradateur de puissance pour alimenter les résistances chauffantes. A cette fin, une sonde de température peut être installée à l'intérieur du rouleau 22 pour mesurer la température de celui-ci. Elle est de préférence directement fixée sur la paroi intérieure du rouleau 22.

Pour alimenter en électricité les résistances chauffantes 36 et connecter la sonde de température, il est prévu un collecteur 37 à balais en bout de l'arbre 35, du côté extérieur d'un des montants latéraux 23a, 23b. Les fils électriques reliant les résistances 36 et la sonde de température peuvent sortir du rouleau 22 par une ouverture 38 réalisée dans le flasque 28a qui est du côté vers le collecteur. Les fils peuvent ensuite passés à l'intérieur de l'arbre 35 par une ouverture 39 pour aller jusqu'aux pistes agencées en bout d'arbre et qui coopèrent avec les balais du collecteur 37.

Préférentiellement, le rouleau de référence 21 n'est pas chauffé. Il peut le cas échéant être refroidi par exemple par ventilation. De la sorte, il n'y a pas de dilatation du rouleau de référence 21 influant sur le positionnement du film 10 par rapport aux filets 26a, 26b. Bien entendu, le diamètre du rouleau de référence 21 est déterminé en fonction de la largeur du film 10 afin d'avoir une rigidité suffisante.

Pour assurer un bon placage du film 10 sur le rouleau de référence 21, il est préférable que le chemin de défilement du film 10 fasse un angle au niveau du rouleau de référence 21 comme l'illustre schématiquement la figure 7. La figure 7 représente à titre d'exemple une première bobine 3 sur lequel est déroulé le film 10 et une deuxième bobine 3 sur lequel le film 10 est enroulé après réalisation des lignes de prédécoupe par le rouleau de découpe 22.

Les lignes de prédécoupe peuvent être sous forme continue dans le film 10, c'est-à-dire que chaque ligne de prédécoupe correspond à un sillon ininterrompu réalisé dans la couche inférieure 12. Pour cela, les filets 26a, 26b sont sous forme continue sur toute la circonférence de la bague 27 du rouleau 22.

Les lignes de prédécoupé peuvent aussi être sous forme discontinue dans le film 10, c'est-à-dire que chaque ligne de prédécoupe correspond à une série successive d'incisions réalisées dans la couche inférieure 12. Pour cela, chaque filet 26a, 26b est sous forme discontinue sur la circonférence de la bague 27 du rouleau 22 de façon à y former une série de dents successives. Les dents sont de préférence toutes identiques entre elles et deux dents successives toujours séparées par un espace identique. Par exemple, les dents peuvent présentées une longueur de 0,3 mm et un espace entre deux dents successives de 0,2 mm. Ces dimensions peuvent aussi être plus grandes, par exemple une longueur de dent de 2 mm et un espacement de 0,8 mm.

Dans la mesure où les lignes de prédécoupe ne traversent pas la couche inférieure 12 du film 10, elles peuvent s'étendre éventuellement dans les zones de bord qui seront soudées ensemble pour confectionner le pochon. Autrement dit, elles s'étendent alors sur toute la largeur du pochon. Mais il est également possible de ne pas poursuivre les lignes de prédécoupe dans les zones de soudage. Il suffit pour cela de supprimer les filets au niveau de la portion correspondante de la bague 27 du rouleau 22.

A titre d'exemple, le rouleau de référence 21 peut être réalisé en acier traité et rectifié de même que les chemins de roulement 28a, 28b. Le rouleau creux 22 peut être avantageusement réalisé en aluminium en raison de son coefficient de dilatation. Son diamètre extérieur peut être compris entre 150 et 250 mm et l'épaisseur de paroi entre 10 et 30 mm. La bague de découpe 27 peut être réalisé en acier, un acier allié ou du laiton. Le diamètre du rouleau de référence peut être compris entre 100 et 300 mm pour des largeurs de film 10 de l'ordre de 500 à 700 mm. La bague de découpe 27 peut avoir une épaisseur d'environ 3 mm et est de préférence polie. Les filets 26a, 26b ont de préférence une hauteur comprise entre 0,5 et 1 mm. Le jeu à froid entre la bague 27 et le rouleau 22 peut être compris entre 0,1 et 0,4 mm. La puissance des résistances chauffantes peut être comprise entre 1500 et 3000 W.

Par ailleurs, l'on notera que le rouleau 22 est aisément interchangeable grâce à ses paliers coulissants 30a, 30b, ce qui permet par exemple de monter rapidement un autre rouleau 22 de diamètre différent.

En pratique, la profondeur du sillon peut être compris entre 50 et 60 µm pour une couche inférieure 12 ayant 70 µm d'épaisseur.

Bien entendu, le nombre de lignes de prédécoupe peut être varié en changeant le nombre de filets sur la bague 27.

Dans le cas où la ligne de prédécoupe est de type discontinue, les dents formant les filets 26a, 26b peuvent avoir la forme d'aiguilles au lieu d'être allongées.

Par ailleurs, il est parfaitement possible d'utiliser le dispositif pour réaliser les sillons dans la couche inférieure 12 avant que celle-ci ne soit assemblée aux autres couches formant le film 10, c'est-à-dire avant l'opération de lamination du film 10. S'il est acceptable pour la confection de l'emballage et ses fonctionnalités que la couche inférieure 12 présente des lignes de prédécoupe formés par des perforations successives, chaque filet 26a, 26b peut être sous forme de dents suffisamment longues pour perforer la couche inférieure 12. Pour chaque filet 26a, 26b, on peut prévoir une rainure circonférentielle 21a correspondante agencée dans la surface du rouleau de référence 21. Ainsi, les dents pénétreront la rainure comme l'illustre la figure 8. Dans une telle utilisation du dispositif, il n'est pas utile de prévoir un rattrapage des jeux radiaux tels que décrit précédemment.

Un perfectionnement au dispositif consiste à prévoir un réglage de l'entraxe du rouleau de référence 21 et du rouleau de prédécoupe 22. Ainsi, il est possible de varier la profondeur des sillons ou encore d'adapter le dispositif à des films ayant des épaisseurs différentes. Pour cela, les chemins de roulement 28a, 28b et les zones d'appuie correspondantes du rouleau de référence 21 peuvent être légèrement conique. En décalant axialement les surfaces coniques de l'un des rouleaux par rapport celles de l'autre rouleau, l'on varie l'entraxe. Par exemple, comme illustré schématiquement sur la figure 9 pour le chemin de roulement 28a, les flasques formant chemins de roulement 28a, 28b sont coniques et agencés fixes sur le rouleau 22. Au contraire, des flasques - repéré 28a' - présentant une surface extérieure de roulement correspondante peuvent être montés sur l'arbre du rouleau de référence 21 de façon déplaçable en direction axiale grâce par exemple à des vis. Ainsi, il est possible de varier la profondeur des sillons par exemple sur un intervalle de 50 µm, voir plus, par déplacement axiale relatif de quelques millimètres.

Nous allons maintenant décrire un autre dispositif selon l'invention pour réaliser au moins une ligne de prédécoupe dans un film. Pour former les lignes de prédécoupe, ce dispositif est basé sur un outil présentant des saillies pour pénétrer dans la couche inférieure 12 du film 10 et provoquer un fluage du matériau de la couche 12 en association par exemple avec des ultrasons.

Dans le mode de réalisation représenté sur la figure 10, le dispositif comprend deux molettes cylindriques 51a, 51b agencées coaxialement et montées à rotation de préférence sur un même arbre non représenté. Chacune des molettes 51a, 51b présente deux filets 52a, 52b agencés sur sa circonférence. Ces filets 52a, 52b sont en saillie sur la surface circonférentielle de la molette correspondante. Dans l'exemple illustré, chaque filet 52a, 52b est localisé dans un plan radial respectif sur la molette 51a, 51b correspondante.

En opération, le film 10 défile entre les molettes 51a, 51b d'une part et une sonotrode 50 d'autre part. Plus précisément, la couche inférieure 12 - c'est-à-dire celle constituant la face interne de l'emballage - est du côté des molettes 51a, 51b et la couche supérieure 11 du côté de la sonotrode 50. Le film 10 est mis en pression entre les molettes 51a, 51b et la sonotrode 50. La sonotrode 50 vibre à des fréquences ultrasonores pour permettre le fluage du matériau de la couche 12. Les molettes 51a, 51b servent d'enclume à la sonotrode. Il en résulte que les filets 52a, 52b pénètrent dans la couche inférieure 12 du film 10, la pénétration s'accompagnant du fluage du matériau de la couche 12 vers l'extérieur du sillon ainsi formé par chaque filet.

Le fluage du matériau vers l'extérieur du sillon peut se faire soit le long d'un seul bord du sillon, soit le long de ses deux bords en fonction de la forme de la section des filets 52a, 52b. Il en résulte la formation d'un bourrelet le long d'un des bords du sillon ou la formation d'un bourrelet respectif de chaque côté du sillon. Ces bourrelets ont pour avantage d'accroître la solidité du film 10 autour du sillon, ce qui améliore le guidage de l'ouverture de l'emballage le long de la ligne de prédécoupe ainsi formée. De façon préférée, le film 10 défile tangentiellement à la circonférence des molettes 51a, 51b, le long de la surface de travail 50a de la sonotrode 50. Le mouvement vibratoire ultrasonique de la sonotrode 50 se fait en direction des molettes 51a, 51b. En fait, il est avantageux que le plan de la sonotrode 50 comprenne l'axe des molettes 51a, 51b.

Chaque molette 51a, 51b présente au moins une surface d'appui circonférentielle sur lequel le film 10 prend appui lorsqu'il défile entre les molettes et la sonotrode 50. Les filets 51a, 51b sont en saillie par rapport à cette surface d'appui. La hauteur A des filets 51a, 51b par rapport à la surface d'appui détermine la profondeur des sillons formés dans la couche inférieure 12 du film 10. Par ailleurs, afin de permettre le fluage du matériau de la couche 12 vers l'extérieur du sillon pour former un ou deux bourrelets le long de celui-ci, la molette est pourvue d'un dégagement circonférentiel correspondant le long des filets 52a, 52b.

Les figures 11 et 12a-c illustrent une configuration préférée de molette prévue pour fluer le matériau de la couche inférieure 12 du film 10 que vers un seul côté de chacun des sillons formés. En particulier, la figure 12a montre la section axiale de la molette 51a au niveau des filets 52a. La figure 12b montre en section axiale le film 10 pris entre la sonotrode 50 et la molette 51a et la figure 12c un agrandissement local au niveau du filet du côté droit de la molette51a. La surface d'appui circonférentielle sur lequel le film 10 prend appui lorsqu'il défile entre cette molette et la sonotrode 50 est référencée 53. Pour fluer le matériau que vers un bord du sillon, la section des filets 52a est asymétrique. En l'occurrence, le profil du filet présente un flanc incliné par rapport à la surface d'appui 53, pour amincir progressivement le filet vers son sommet. Le matériau de la couche inférieure 12 est flué le long de ce flanc incliné vers l'extérieur du sillon formé par ce filet. Au contraire, le flanc opposé du profil du filet est à angle droit par rapport à la surface d'appui 53, voir éventuellement à dépouille négative. D'où, le matériau de la couche inférieure 12 n'est pas flué vers l'extérieur le long de ce flanc droit. La largeur du filet détermine évidemment la largeur du sillon résultant dans la couche 12 du film 10. A titre d'exemple, la largeur au sommet du profil du filet peut être choisi dans l'intervalle allant de 0,1 à 0,2 mm. L'angle du flanc incliné du filet par rapport à la surface d'appui 53 peut avantageusement être choisi dans l'intervalle allant de 55 à 80 degrés. La hauteur du filet peut être choisie pour ne laisser subsister que 10 µm de matériau de la couche 12 sous le sillon. Ainsi, pour une couche 12 présentant 70 µm d'épaisseur, il est possible d'adopter une hauteur de filet A de 60 µm. Un tel dimensionnement permet d'assurer l'intégrité de la couche centrale 13 en aluminium.

A titre d'exemple, la fréquence de vibration de la sonotrode est comprise entre 20 et 70 kHz. Elle est avantageusement de 40 kHz dans le cas de la couche 12 en polypropylène. L'amplitude des vibrations ultrasonores est de préférence d'au moins 5 µm, mais plus avantageusement d'au moins 20 µm. Une amplitude de 25 µm est particulièrement préférée. Par ailleurs, le diamètre de la molette au niveau de la surface d'appui 53 est de préférence supérieure a 60 mm. Chaque molette 51a 51b exerce un effort de compression sur le film 10 contre la sonotrode 50 qui est avantageusement comprise dans l'intervalle allant de 1,5 à 2,5 daN. Cette compression est de préférence exercée en poussant l'arbre des molettes vers la sonotrode, l'arbre pouvant être monté sur un bâti par le biais de paliers coulissants sur lesquels on exerce la force requise.

Dans l'exemple illustré, pour chaque sillon par le filet 52a correspondant, le fluage du matériau se fait le long du sillon du côté opposé à l'autre sillon formé par l'autre filet 52a de cette même molette. La surface d'appui 53 s'étend entre les deux filets 52a, 52b. C'est donc la hauteur A des filets 52a, 52b mesurée à partir de la surface d'appui 53 qui détermine la profondeur des sillons formés dans la couche inférieure 12 du film 10. Il n'y a pas de dégagement dans la surface d'appui 53 le long des filets 52a puisqu'il n'y a pas de fluage vers l'extérieur de ce côté des filets. Les surfaces circonférentielles 54a et 54b s'étendant du côté extérieur des filets 52a sont situées à un niveau inférieur à celui de la surface d'appui 53. Autrement dit, la hauteur B des filets 52a mesurés à partir des surfaces circonférentielles 54a, 54b est supérieure à la hauteur A précitée. Cette différence de niveau constitue ici le dégagement précité permettant la formation des bourrelets le long des sillons formés dans la couche 12 du film 10 comme illustré sur la figure 11c dans laquelle le bourrelet formé est référencé 55.

Bien entendu, il est possible de fluer le matériau de la couche 12 vers l'extérieur de l'autre côté d'un sillon en inversant le profil précité, c'est-à-dire en agençant le flanc incliné du filet 52a concerné du côté vers l'autre filet 52a. Dans ce cas, l'on peut ménager un dégagement dans la surface d'appui 53 le long du filet concerné afin de permettre la formation du bourrelet. Il est aussi possible d'utiliser les surfaces 54a et 54b comme surface d'appui et d'abaisser le niveau de la surface 53 par rapport aux surfaces 54a et 54b de façon à définir le dégagement souhaité.

Bien entendu, si l'on souhaite fluer le matériau de la couche 12 de part et d'autre du sillon, il suffit de modifier le profil du filet 52a concerné en remplaçant le flanc droit par un flanc incliné de façon similaire au flanc opposé. Dans ce cas, un dégagement est de préférence prévu sur la molette le long de chaque côté du filet concerné.

Par ailleurs, il est préférable que la partie active de la sonotrode 50 soit suffisamment longue pour couvrir toute la portion circonférentielle active de la molette comme le montre les figures 13b et 14b. Les molettes peuvent être réalisées par usinage dans de l'acier ayant éventuellement reçu un traitement superficiel.

Grâce à ce dispositif, il est possible de former des sillons aussi bien de type continu que discontinu. Pour former un sillon continu, il suffît que les filets soient continus sur la circonférence de la molette comme illustré par les figures 14a-b. Pour former un sillon discontinu, il suffit que le filet 52a concerné soit interrompu en différents endroits de la circonférence de la molette 51a. Autrement dit, le filet est réalisé sous la forme d'une succession de dents sur la circonférence de la molette 51a. Les figures 13a-b en donnent un exemple. Il est préférable que les dents aient toutes la même longueur et qu'elles soient chacune séparées de la suivante d'un même espace afin d'obtenir une ligne de prédécoupe présentant une même préfragilisation sur toute sa longueur. A titre d'exemple, la longueur d'une dent peut être choisie dans l'intervalle allant de 0,2 mm à 0,4 mm et un espace entre deux dents choisi dans l'intervalle allant de 0,1 à 0,3 mm.

De façon générale, le filet a préférentiellement toujours la même section et la même taille sur toute sa longueur.

Par ailleurs, dans la mesure où les lignes de prédécoupe de type continu ne traversent pas la couche inférieure 12 du film 10, elles peuvent s'étendre éventuellement dans les zones de bord qui seront soudées ensemble pour confectionner le pochon. Autrement dit, elles s'étendent alors sur toute la largeur du pochon. Mais il est également possible de ne pas poursuivre les lignes de prédécoupe dans les zones de soudage. Il suffit pour cela de supprimer les filets au niveau de la portion correspondante de la molette 51a.

Les molettes 52a, 52b peuvent être montées libre en rotation. Elles peuvent également être entraînées en rotation avec une vitesse tangentielle au niveau de leur surface d'appui 53 qui soit égale à la vitesse de défilement du film 10.

Bien entendu, la description de la molette 51a est aussi applicable à la molette 51b. D'ailleurs, la molette 51b est de préférence identique à la molette 51a, chacune assurant dans notre exemple la réalisation de deux lignes de prédécoupe dans un flanc correspondant de l'emballage confectionné subséquemment.

Au lieu d'avoir deux molettes 51a, 51b, il est possible de ne recourir qu'à une seule molette plus large sur laquelle sont agencés les quatre filets 52a, 52b. Néanmoins, il est avantageux d'utiliser deux molettes distinctes pour pouvoir régler leur espacement axial par exemple grâce à des entretoises de longueurs différentes.

Bien entendu, le nombre de lignes de prédécoupe peut être choisi librement en fournissant un nombre de filets correspondants.

Les figures 15 à 21 illustrent un autre mode de réalisation du dispositif à ultrason selon l'invention dans lequel les molettes 51a, 51b sont remplacées par deux sabots 71a, 71b. Ainsi, le film 10 est mis en pression entre la sonotrode 50 d'une part et les sabots 71a, 71b d'autre part. Ce mode de réalisation de l'invention permet de réaliser des sillons de type continu avec une excellente maîtrise du fluage de la matière.

Chacun des sabots correspond globalement à l'agencement de la circonférence des molettes 51a, 51b de la figure 10, mais sous forme développée. Pour cette raison, la description faite à ce sujet concernant la molette de la figure 10 s'applique mutatis mutandis. La configuration à sabots peut cependant présenter des spécificités intéressantes que nous allons voir.

Nous décrirons le sabot 71a en référence aux figures 15 à 21, cette description valant aussi pour l'autre sabot 71b. La flèche F désigne le sens de défilement du film. Le sabot 71a présente deux filets 72a rectilignes parallèles et une surface d'appui 73 s'étendant entre ces deux filets. En opération, le film 10 en défilement prend appui sur la surface 73. Les filets 72a sont en saillie par rapport à la surface d'appui 73. La hauteur maximale des filets 72a par rapport à la surface d'appui 73 définie la profondeur du sillon formé dans la couche inférieure 12 du film 10.

Les surfaces 74a, 74b sont situées à un niveau inférieure à la surface d'appui 53 pour permettre le fluage du matériau de la couche 12 vers l'extérieur du sillon le long duquel est donc formé un bourrelet 75. Le profil des filets est similaire à ceux 52a, 52b de la figure 10.

Bien entendu, il est possible de fluer le matériau de la couche 12 vers l'extérieur du sillon, soit d'un côté du sillon, soit de l'autre, soit des deux en fonction du profil choisi pour le filet concerné. Un dégagement correspondant est alors agencé le long des flancs du filet servant à fluer le matériau vers l'extérieur du sillon formé. Par ailleurs, il est préférable que la partie active de la sonotrode 50 soit suffisamment longue pour couvrir toute la portion circonférentielle active de la molette comme le montre les figures 13b et 14b.

Il est avantageux de prévoir sur le sabot une surface 73a formant rampe en amont du début des filets 72a et qui atteint progressivement le niveau de la surface d'appui 73. Ainsi, le film 10 arrive sur le sabot sans rencontrer d'arrêté vive susceptible d'endommager le film. Dans l'exemple illustré, elle part du niveau des surfaces 74a, 74b.

Les directions amont et avale sont bien entendu définies en fonction du sens de défilement du film 10.

Il est avantageux de prévoir que les filets 72a augmentent progressivement de hauteur depuis le côté amont du sabot vers le côté aval. De même, il est avantageux de prévoir que les filets 72a s'élargissent progressivement depuis le côté amont du sabot vers le côté aval. L'élargissement se fait de préférence vers le côté du flanc incliné du filet, c'est-à-dire vers le côté vers lequel le filet flue la matière. La forme générale de la section du filet reste de préférence identique suivant toute sa longueur. Les figures 18a-c illustrent cette progressivité. La figure 18a montre une section au niveau du début des filets 72a où ils se confondent avec la surface d'appui 73. La figure 18b montre une section prise à mi-longueur des filets 72a. La figure 18c montre la section prise au niveau du sommet des filets 72a. A titre d'exemple, la largeur d'un filet 72a évolue linéairement de 0 à 150 µm et sa hauteur évolue linéairement de 0 à 60 µm, la longueur du filet étant de 12 mm. Du fait de cette progressivité, le fluage de la matière de la couche 12 du film 10 est progressif et contrôlé. Il permet notamment de garantir un fluage vers l'extérieur du sillon uniquement vers un bord de celui-ci. La ligne de renforcement le long du sillon est d'autant plus résistante et évite donc efficacement que la déchirure suivant la ligne de prédécoupe ne s'écarte de celle-ci du côté de ce bourrelet lors de l'ouverture de l'emballage par l'utilisateur. Il permet aussi de faire des sillons très larges grâce à la longueur des filets qui peut être importante. La longueur L du filet 72a (la partie 72a' décrite ci-après non comprise) - qui pénètre la couche 12 - est de préférence comprise entre 5 et 75 mm pour des ultrasons à 40 kHz, et plus particulièrement entre 8 et 20 mm dans le cas du polypropylène : dans l'exemple représenté à la figure 19, la longueur L vaut 12 mm. Dans le cas des fréquences ultrasonores inférieures, le filet peut encore être plus long.

Par ailleurs, il est avantageux également que les filets 72a diminuent progressivement de hauteur à partir de leur sommet de plus grande hauteur dans la direction avale. Cette portion est référencée 72a'. Ceci permet un dégagement progressif des filets hors du sillon tout en assurant une bonne conformation des flancs du sillon.

Enfin, il est avantageux que le profil du filet présente un sommet 76 formant une arrête parallèle à la surface d'appui 73. Ceci a pour effet de procurer un fond de sillon plat, mais aussi peut permettre de dégager le filet de la couche 12 en coupant les ultrasons. En effet, le fluage cessant, le filet remonte automatiquement vers la surface de la couche 12 sur laquelle il glisse sans l'endommager, en raison de la surface d'appui plane définie par le sommet 76 du filet. Ainsi, il est possible d'interrompre la ligne de prédécoupe par exemple dans le zones servant ultérieurement au soudage des bords de l'emballage.

La compression du film 10 est de préférence réalisée par poussée des sabots vers la sonotrode 50. La force exercée par chaque sabot sur le film est là-aussi avantageusement comprise dans l'intervalle allant de 1,5 à 2,5 daN.

Là encore, le nombre de filets par sabot ainsi que le nombre de sabots peuvent être variés en considération du nombre de lignes de prédécoupe à former.

Les sabots peuvent être réalisées par usinage dans de l'acier ayant éventuellement reçu un traitement superficiel.

Les dispositifs à ultrasons décrits sont avantageux du fait que les filets formant saillie sont ménagés sur l'enclume - c'est-à-dire les molettes ou les sabots dans les exemples décrits - et non pas sur la sonotrode. De ce fait, il est possible de donner des formes et des dimensions très variables aux saillies servant à former la ligne de prédécoupe car elles ne sont pas soumises aux ultrasons alors que la surface active de la sonotrode 50 peut être simplement plane et donc particulièrement adéquate pour vibrer aux ultrasons. Au contraire, si les saillies étaient formées sur la sonotrode, les formes et dimensions seraient limitées en raison des contraintes induites par les vibrations ultrasonores. Par ailleurs, ces dispositifs permettent d'opérer à des vitesses de défilement élevée du film, jusqu'à 200 m/min, voir plus.

Les dispositifs de l'invention sont particulièrement avantageux du fait qu'ils permettent de recourir à une coupe et/ou un fluage évitant l'enlèvement de matière de la couche 12 lors de la formation de la ligne de prédécoupe. Ainsi, il n'y a pas de risque de pollution du contenu alimentaire de l'emballage. Il n'y a pas non plus de brûlure de la couche 12 du film 10, ni fumée, ni projection de particules de matière de cette couche tout au moins dans le cas du fluage avec ultrason. De plus, le film est moins fragilisé qu niveau de la ligne de prédécoupe que dans le cas des technologies laser qui entraîne un dépassement du point de fusion de la matière de la couche concernée du film, ce qui modifie localement la structure de la matière et rend ainsi la couche plus résiliente. Cet inconvénient n'existe pas en recourant à une coupe et/ou fluage par ultrason car le point de fusion n'est pas dépassé.

Par ailleurs, les lignes de prédécoupe de type continu sont préférables à celles de type discontinue car les premières fournissent un meilleur guidage lors de l'ouverture de l'emballage par l'utilisateur. En effet, pour les secondes, le guidage de l'ouverture n'est pas assurée de façon fiable entre deux entailles ou trous successifs . Dans le cas des lignes de prédécoupe de type discontinue, il est préférable d'avoir des entailles allongées et alignées plutôt que d'avoir des trous ronds obtenus par exemple avec des aiguilles. En effet, les entailles allongées imprègnent un guidage d'ouverture suivant la ligne de prédécoupe au contraire de trous ronds.

Il est avantageux que les lignes de prédécoupe ne soient pas réalisées par perforation complète de la couche inférieure 12 dans le cas des films 10 pris en exemple, surtout dans le cas de lignes de prédécoupe de type continu. Dans le cas où les lignes de prédécoupe traversent les zones de bord soumis à soudage lors de la confection de l'emballage, le soudage demeure possible au niveau su sillon de la ligne de prédécoupe. Le soudage ne serait pas possible dans le cas où le sillon formant la ligne de prédécoupe traverserait toute la couche 12 et il en résulterait un défaut d'étanchéité de l'emballage. Par ailleurs, la partie de la couche 12 subsistant sous le sillon non traversant protège la couche 13 plus fragile notamment contre le pliage accidentel de l'emballage au niveau de la ligne de prédécoupe.

De façon générale, les dispositifs des figures 10 à 21 sont plus avantageux que celui de la figure 1 s'ils opèrent sur des films multicouches car la surface de référence pour positionner le film par rapport à la saillie prend appui sur la couche 12, c'est-à-dire celle dans laquelle est réalisée la ligne de prédécoupe. Dès lors, la profondeur du sillon continu ou discontinu est mieux maîtrisée puisque n'interviennent pas les tolérances sur les autres couches du film. Celui de la figure 1 peut être plus avantageux dans le cas où le dispositif opère sur un film monocouche - par exemple avant lamination - si l'on souhaite mieux maîtriser l'épaisseur de matière restant sous le sillon.

Les figures 22a à 26c illustrent différents exemples d'emballages réalisables à partir des films portant des lignes de prédécoupe réalisées selon l'invention.

Sur les figures 22a et 22b, on a représenté un emballage 100 se présentant sous la forme d'un pochon ou sachet fermé hermétiquement par soudure. Cet emballage 100 est un sachet plat, c'est-à-dire qu'il comporte deux flancs soudés entre eux sur les quatre côtés 110,120,130, 140.

Sur les figures 23a et 23b, on a représenté un autre emballage 200 du type pochon plat qui comprend deux flancs soudés seulement sur trois côtés 210, 220, 230 sur quatre. Il présente un fond 250 non soudé comme le montre plus particulièrement la figure 23b. Autrement dit, le pochon est réalisé à partir d'une feuille pliée en deux, la zone de pliage définissant le fond 250.

Sur les figures 24a, 24b, 25a, 25b, 25c et 26a, 26b, 26c, on a représenté des emballages 300, 400, 500 du type pochons à soufflet(s).

Plus particulièrement, les figures 24a et 24b représentent un emballage 300 comportant trois côtés soudés 310, 320, 330 et un fond 350 comportant un soufflet réalisé par pliage.

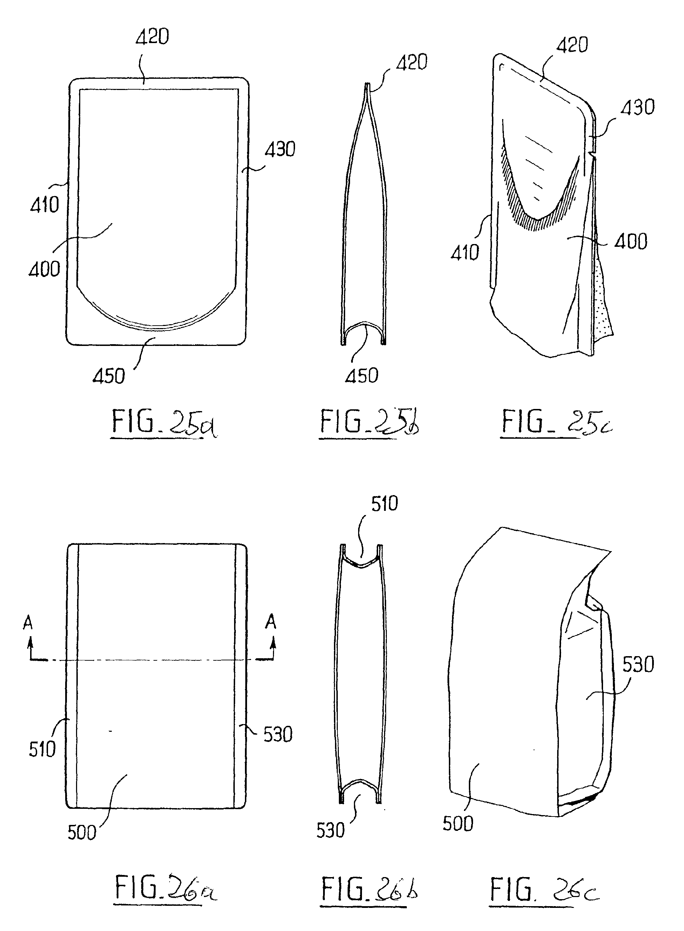

Les figures 25a, 25b et 25c représentent un autre type de pochon à soufflet comprenant trois côtés soudés 410, 420, 430 et un fond à soufflet 450 réalisé avec deux bords parallèles soudés.

Les figures 26a, 26b, 26c représentent un emballage 500 qui comportent deux bords latéraux 510, 530 soudés de manière à réaliser sur chacun des bords 510, 530 un soufflet, comme cela est plus particulièrement représenté sur les figures 26b et 26c.

Les emballages 100, 200, 300, 400 et 500 représentés respectivement sur les figures 22a à 26c peuvent notamment être destinés à être stérilisés après leur remplissage et leur fermeture. Généralement, ces emballages sous la forme de sachet ou de pochon sont destinés à contenir de la matière alimentaire, par exemple de la matière alimentaire pour animaux. Ainsi, ils sont réalisés à partir de matériaux devant résister à une stérilisation en ambiance humide et sous pression comme ceux donnés en exemple en relation avec la figure 1.

Bien entendu, d'autres types d'emballages que ceux illustrés 100, 200, 300, 400 et 500 peuvent être réalisés en application de l'invention.

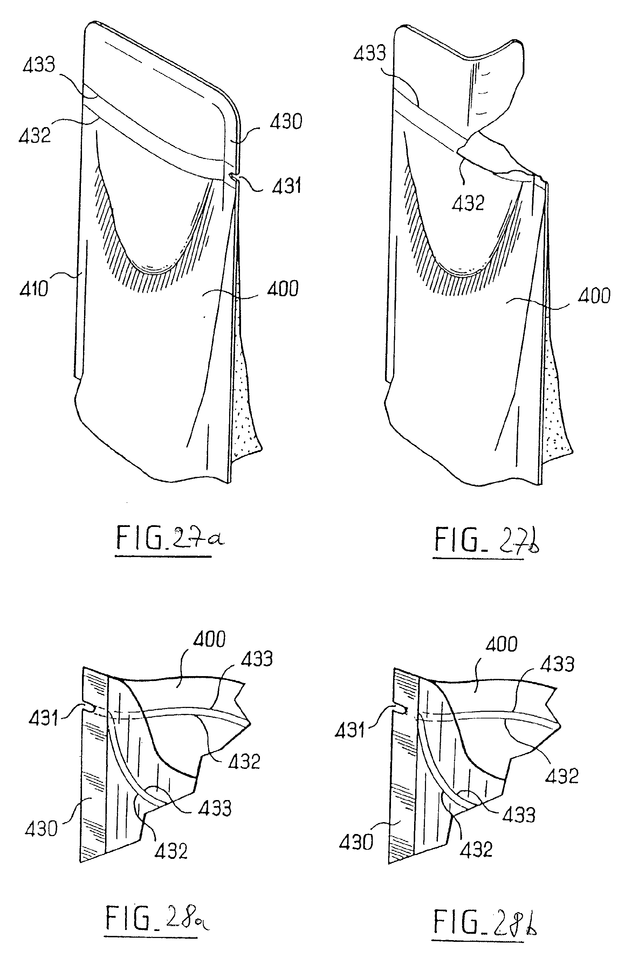

Les figures 27a et 27b représentent plus particulièrement un emballage selon l'invention du type sachet à un soufflet représenté sur les figures 25a, 25b, et 25c, à trois côtés soudés et un soufflet formé dans son fond. Comme le montre la figure 27a, cet emballage 400 comporte dans sa partie haute, sur chaque face interne de ses flancs, deux lignes de prédécoupe 432, 433 parallèles faiblement espacées l'une de l'autre. Elles peuvent être réalisées avec un dispositif selon l'invention dans la couche inférieure du film à partir duquel est fabriqué l'emballage. L'espacement entre les deux lignes de prédécoupe parallèles est compris environ entre 2 et 5 mm.

Dans le mode de réalisation représenté, chaque face interne des flancs de l'emballage 400 comporte les deux lignes de prédécoupe 432, 433, mais on peut également prévoir qu'une seule face interne comporte les deux lignes de prédécoupe parallèles.

Selon un mode de réalisation, la ligne de prédécoupe s'étend sur la totalité de la largeur du film, c'est-à-dire la totalité de la largeur de l'emballage comme cela est représenté plus particulièrement sur la figure 27a et en détail sur la figure 28a. Ainsi, comme le montre ces figures, les lignes de prédécoupe s'étendent sur les bords soudés 430, 410 dudit emballage 400.

Selon une variante représentée plus particulièrement sur la figure 27b, on peut prévoir de réaliser chaque ligne de prédécoupe sur seulement une partie de la largeur du film, c'est-à-dire une partie de la largeur de l'emballage, en laissant exempt de micro-perforations, les deux bords longitudinaux 430 du film destinés à être soudés pour confectionner ledit emballage. Ainsi, comme le montre la figure 28a, chaque ligne de prédécoupe s'étend sur une partie de la largeur dudit emballage 400 en étant interrompue au niveau de ses soudures latérales 430.

Comme le montre les figures 27a, 28a et 28b, il peut être prévu qu'au moins un bord latéral soudé 430 de l'emballage 400 comprend une encoche d'amorce d'ouverture 431 située entre deux lignes de prédécoupe. Selon le mode de réalisation représenté sur la figure 28a, les lignes de prédécoupe 432, 433, démarrent directement a partir de l'encoche d'amorce d'ouverture 431. En variante, les lignes de prédécoupe pourraient s'étendre jusqu'au bord de l'emballage en encadrant l'encoche d'amorce. Au contraire, selon le mode de réalisation représenté sur la figure 28b, les lignes de prédécoupe 432, 433 démarrent à partir du bord soudé 430, il existe donc un intervalle non prédécoupé entre l'encoche d'amorce d'ouverture 431 et les lignes de prédécoupe 432, 433.

L'encoche d'amorce d'ouverture 431 favorise le déchirement des matériaux constituant l'emballage. Plus particulièrement, le déchirement amorcé au niveau de l'encoche d'amorce d'ouverture 401 se propage dans la zone de soudure 430 en direction de la soudure opposée 410. Ce déchirement se propage sur chacun des flancs de l'emballage jusqu'à rencontrer une des deux lignes de prédécoupe 432 ou 433 prévues sur la face interne de chaque flanc de l'emballage. Le déchirement se poursuit alors le long de cette ligne de prédécoupe et guide l'ouverture dudit emballage jusqu'au côté opposé comme cela est plus particulièrement représenté sur la figure 27b.

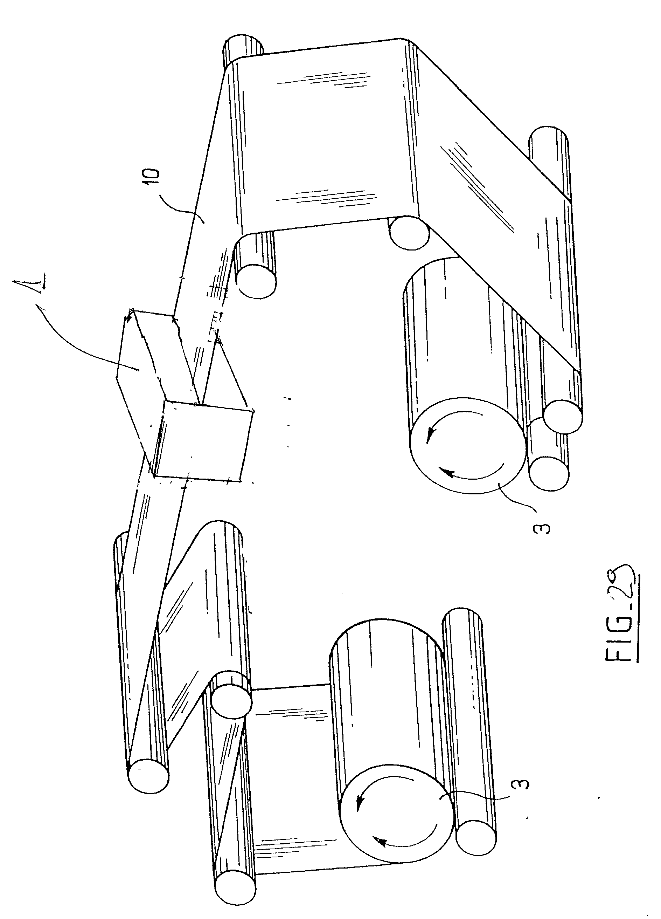

Comme le montre plus particulièrement la figure 29, les lignes de prédécoupe selon l'invention peuvent être effectuées sur un film qui est enroulé sur des bobines 3 et alimenté en continu pour la fabrication de plusieurs emballages. Le dispositif réalisant les lignes de prédécoupe est représenté schématiquement et est référencé 1. Comme cela est représenté sur le film 10, le film une fois prédécoupé à plusieurs endroits déterminés, sera enroulé sur une bobine 3 pour être utilisé ultérieurement sur des machines de conditionnement ou des machines de fabrication des emballages vides.

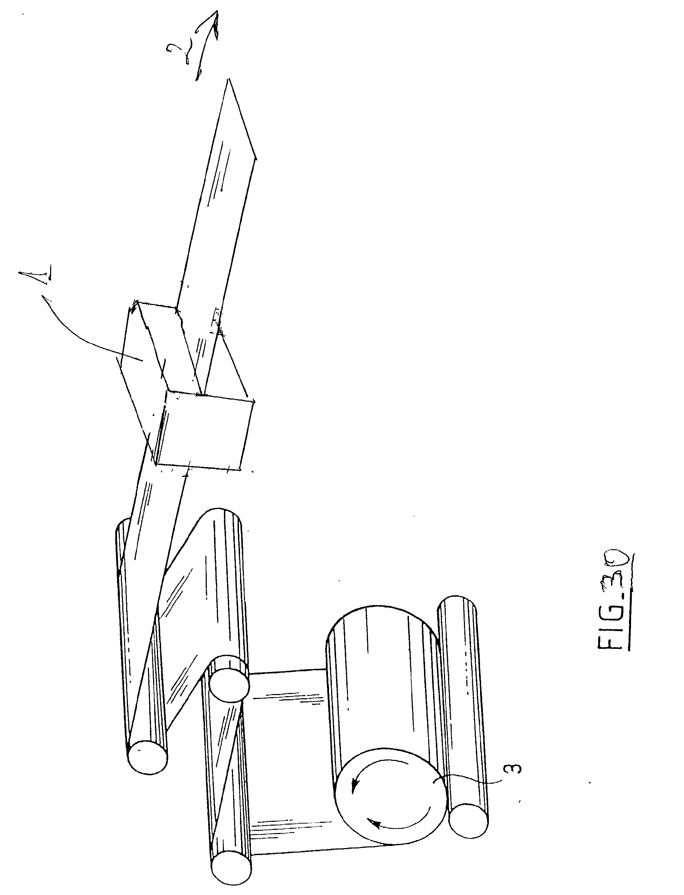

Il peut être aussi prévu de réaliser ces lignes de prédécoupe comme le montre plus particulièrement la figure 30, directement sur la machine de conditionnement ou la machine de fabrication des emballages vides entre l'opération de déroulement des bobines 3 de film et la soudure des côtés des emballages. Le dispositif réalisant les lignes de prédécoupe est également représenté schématiquement et est référencé 1. La flèche référencée 2 indique la direction vers la suite de la machine de conditionnement ou de fabrication des emballages.

Par ailleurs, il est préférable d'éviter les lignes de prédécoupe sous forme de perforations de la couche 12 réalisées par des dents ou des aiguilles avant lamination des couches du film 10 si celui-ci est enroulé sur des bobines avant la confection des emballages. En effet, la perforation provoque une déformation locale du film provoquant un soulèvement des bords autour de chaque trou. Ceci a pour effet de créer un enroulement irrégulier du film sur la bobine avec création d'un renflement au niveau des perforations avec un risque de délamination des couches du film autour des trous. Dans ce cas, il convient donc de préférer les lignes de prédécoupe ne traversant pas totalement la couche 12.

Il est particulièrement avantageux qu'un sillon - continu ou discontinu - formant une ligne de prédécoupe, soit bordé par des bourrelets asymétriques, voir ne soit bordé par un bourrelet que d'un seul côtés. Par bourrelets asymétriques, on entend des bourrelets dont l'un a une hauteur supérieure à l'autre par rapport à la surface du film. Le bourrelet le plus gros confère une résistance renforcée de la couche en matière plastique le long du sillon. Si un flanc de l'emballage présente cette ligne de prédécoupe à proximité d'un de ses bords, le fait d'agencer le bourrelet du côté opposé à ce bord évite que lors de l'ouverture de l'emballage selon la prédécoupe, la déchirure ne quitte la ligne de prédécoupe et ne se propage vers ce côté opposé de l'emballage où se trouvent les aliments qui risqueraient alors d'être déversés accidentellement. Cependant, il est encore plus avantageux que les lignes de prédécoupe soient au moins au nombre de deux dans un même flanc de l'emballage et cheminent à proximité l'une de l'autre comme dans l'exemple de la figure 27a. Dans ce cas, en formant les bourrelets essentiellement le long de chaque ligne de prédécoupe du côté qui est opposé à l'autre ligne de prédécoupe comme le montre le figure 20, les bourrelets empêchent la déchirure - lors de l'ouverture de l'emballage - de s'écarter de la ligne de prédécoupe vers le côté présentant les bourrelets. Il en résulte que la déchirure ne se propage que le long de la ligne de prédécoupe ou est déviée vers l'autre ligne de prédécoupe le long de laquelle se poursuit alors la déchirure et ainsi de suite. Autrement dit, la déchirure d'ouverture de l'emballage se propage uniquement entre les deux lignes de prédécoupe.

Bien entendu, la présente invention n'est pas limitée aux exemples et aux modes de réalisation décrits et représentés, mais elle est susceptible de nombreuses variantes accessibles à l'homme de l'art. En particulier, les dispositifs des figures 10 à 21 recourent à un fluage par ultrason qui peut être supprimé pour réaliser la ligne de prédécoupe uniquement par coupe de la matière de la couche 12. Pour cela, il suffit de remplacer la sonotrode par un rouleau cylindrique ou une plaque plane dans le cas de la figure 10, ce rouleau ou cette plaque servant à presser le film 10 contre les molettes 51a, 51b. De façon similaire, la sonotrode dans le cas de la figure 15 peut être remplacée par une plaque plane pressant le film 10 contre les sabots 71a, 71b. Bien entendu, il est alors préférable de modifier le profil des filets pour les rendre tranchant de façon similaire au dispositif de la figure 1.

Le dispositif des figures 2 à 14 peut également recourir au fluage de la matière de la couche 12 vers l'extérieur du sillon en chauffant par exemple le rouleau 22 à une température telle que les filets 26a, 26b atteignent une température suffisante pour fluer la matière de la couche 12. Le profil des filets peut alors être modifié de façon similaire à ceux 52a de la figure 11. Néanmoins, le fluage par ultrason est plus avantageux car les parties métalliques de l'outillage - c'est-à-dire les filets - restent suffisamment froides pour ne pas être polluées par la matière de la couche 12, la température de fusion de cette dernière n'étant pas dépassée.

Bien entendu, l'application de l'invention n'est pas limitée au film du type pris en exemple. Elle trouve application dans tout film présentant une couche en matière plastique dans laquelle on souhaite former la ou les lignes de prédécoupe. Notamment, elle peut s'appliquer à des films ne présentant pas de couche centrale en aluminium ou encore à des films en matière plastique à couche unique. Bien entendu, si les flancs de l'emballage sont réalisés à partir d'un film monocouche, les lignes de prédécoupe ne seront pas réalisées sous forme de perforations afin d'assurer l'étanchéité de l'emballage.

Les dispositifs de l'invention peuvent opérer non seulement directement sur un film multicouche présentant une couche en matière plastique comme par exemple celui de la figure 1, mais aussi sur une couche en matière plastique avant assemblage avec d'autres couches pour former le film multicouche. Dans ce dernier cas, les dispositifs selon l'invention, y compris ceux recourant au fluage par ultrasons, permettent de réaliser des lignes de prédécoupe sous forme de perforations dans cette couche en matière plastique sans risque d'endommager d'autres couches.

Par ailleurs, concernant les dispositifs des figures 2 à 14, les filets peuvent non seulement être agencés dans un plan radial du rouleau 22 ou molette 51a, 51b, mais peuvent aussi s'étendre transversalement suivant une ligne quelconque dans le but de former par exemple des lignes de prédécoupe curvilignes.

Bien que le film a été décrit comme étant en défilement par rapport au dispositif, il est également possible selon l'invention d'avoir le film à l'arrêt au moment de la réalisation de la ligne de prédécoupe afin de permettre le déplacement - par exemple par translation - d'un outil portant la saillie, vers le film.

## Revendications

1. Dispositif pour réaliser au moins une ligne de prédécoupe dans au moins une couche externe en matière plastique (12) d'un film (10), comprenant :
- une surface d'appui (21 ;53 ; 73) pour le film (10) ; et
- au moins une saillie (26a, 26b ; 52a, 52b ; 72a) pour former la ligne de prédécoupe par pénétration de la saillie dans ladite couche en matière plastique (12) lorsque le film (10) est en position contre ladite surface d'appui.

2. Dispositif selon la revendication 1, dans lequel la saillie est agencée sur un support (22 ; 51a, 51b ;71a, 71b), la ligne de prédécoupe étant formée par défilement relatif du film (10) par rapport au support.

3. Dispositif selon la revendication 1 ou 2, dans lequel la saillie (26a, 26b) est apte à inciser la couche en matière plastique.

4. Dispositif selon l'une quelconque des revendications 1 à 3, dans lequel la saillie (52a, 52b ; 72a) provoque le fluage de la matière plastique de ladite couche (12) le long de la ligne de prédécoupe pour former un bourrelet (55 ; 75) sur ladite couche (12) le long d'au moins un côté de la ligne de prédécoupe.

5. Dispositif selon la revendication 4, dans lequel la saillie provoque la formation d'un bourrelet sur la surface de ladite couche en matière plastique (12) le long de chaque côté de la ligne de prédécoupe, un desdits bourrelets étant au moins 30 %, de préférence au moins 50%, plus avantageusement au moins 100 % plus haut par rapport à l'autre desdits bourrelets.

6. Dispositif selon la revendication 4, dans lequel la saillie provoque la formation d'un bourrelet (55 ; 75) sur la surface de ladite couche en matière plastique (12) uniquement le long d'un côté de la ligne de prédécoupe.

7. Dispositif selon la revendication 5 ou 6, dans lequel la saillie (52a; 72a) présente une section asymétrique.

8. Dispositif selon l'une quelconque des revendications 4 à 7, dans lequel la saillie (52a, 52b ; 72a) provoque le fluage de la matière plastique en coopération avec des ultrasons.

9. Dispositif selon la revendication 8, comprenant :
- une enclume (51a, 51b ; 71a, 71b), et
- une sonotrode (50) pour appliquer des vibrations ultrasonores au film (10) lorsque le film est comprimé entre la sonotrode et l'enclume,
dans lequel la saillie (52a, 52b ; 72a)est agencée sur ledit enclume.

10. Dispositif selon la revendication 9 ou 10 en ce qu'elle dépendent de la revendication 2, dans lequel la saillie (72a) a une forme allongée rectiligne dans la direction du défilement du film, la largeur et/ou la hauteur de la saillie augmentant de préférence dans le sens du défilement du film (F).

11. Dispositif selon la revendication 10, dans lequel la saillie présente une section ayant un sommet (76) plat parallèle à la surface d'appui.

12. Dispositif selon l'une quelconque des revendications 2 à 9, dans lequel le support est un rouleau (22 ; 51a, 51b) monté à rotation, la saillie (26a, 26b ; 52a, 52b) étant agencée sur la circonférence du rouleau.

13. Dispositif selon la revendication 12, dans lequel la saillie (26a, 26b) est agencée sur la circonférence d'une bague (27), ladite bague étant montée sur le rouleau (22).

14. Dispositif selon la revendication 13, dans lequel un jeu existe entre la bague (27) et le rouleau (22) pris à température ambiante, un élément de chauffage permettant de serrer la bague sur le rouleau par dilatation.

15. Dispositif selon la revendication 12 ou 13, dans lequel la surface d'appui est définie par la circonférence d'un deuxième rouleau (21) dont l'axe est parallèle au premier rouleau (22).

16. Dispositif selon la revendication 15, dans lequel le premier rouleau (22) présente des chemins de roulements (28a, 28b) sollicités contre le deuxième rouleau (21).

17. Procédé pour réaliser au moins une ligne de prédécoupe uniquement dans une première couche en matière plastique (12) d'un film (10) comprenant au moins une deuxième couche (11, 13), le procédé comprenant la réalisation de la ligne de prédécoupe dans la première couche (12) du film à l'aide d'un dispositif tel que défini dans l'une quelconque des revendications 1 à 16.

18. Procédé selon la revendication 17, dans lequel ladite ligne de prédécoupe est réalisée après assemblage des première (12) et deuxième couches (11, 13) du film.

19. Procédé selon la revendication 17, dans lequel ladite ligne de prédécoupe est réalisée avant assemblage des première (12) et deuxième couches (11, 13) du film.

20. Procédé de fabrication d'un emballage souple (400), pouvant notamment être destiné à subir un traitement de conservation, à partir d'au moins un film présentant une première couche en matière plastique (12) et au moins une deuxième couche (11, 13), ladite deuxième couche formant la face externe de l'emballage, comprenant :
- la réalisation d'au moins une ligne de prédécoupe dans uniquement ladite première couche (12) du film selon le procédé défini dans l'une quelconque des revendications 17 à 19, puis
- la confection de l'emballage à partir du film muni de ladite ligne de prédécoupe.

21. Film comprenant au moins une couche en matière plastique présentant une ligne de prédécoupe, ladite couche en matière plastique formant un bourrelet (55 ; 75) sur sa surface le long :
- d'un seul côté de la ligne de prédécoupe, ou
- de chaque côté de la ligne de prédécoupe, un desdits bourrelets étant au moins 30 %, de préférence au moins 50%, plus avantageusement au moins 100 % plus haut par rapport à l'autre desdits bourrelets.

22. Film (10) comprenant au moins une couche en matière plastique (12) dans laquelle est ménagée :
- un sillon formant une ligne de prédécoupe, ou éventuellement
- une succession de perforations dans le cas où le film comprend au moins une autre couche,
le sillon ou les perforations étant réalisés sans enlèvement de matière de ladite couche (12).

23. Emballage (400), pouvant notamment être destiné à subir un traitement de conservation en particulier après son remplissage et sa fermeture, comportant au moins un flanc souple, ledit flanc souple comprenant une couche en matière plastique (12) dans laquelle est ménagée :
- un sillon formant une ligne de prédécoupe, ou éventuellement
- une succession de perforations dans le cas où le film comprend au moins une autre couche,
le sillon ou les perforations étant réalisés sans enlèvement de matière de ladite couche.

24. Emballage selon la revendication 23, **caractérisé en ce que** le sillon correspond à au moins une incision.

25. Emballage (400), pouvant notamment être destiné à subir un traitement de conservation en particulier après son remplissage et sa fermeture, comportant au moins un flanc souple, ledit flanc souple comprenant une couche en matière plastique dans laquelle est ménagé un sillon formant une ligne de prédécoupe (432), ladite couche en matière plastique formant un bourrelet (55 ; 75) sur sa surface le long :
- d'un seul côté de la ligne de prédécoupe, ou
- de chaque côté de la ligne de prédécoupe, un desdits bourrelets étant au moins 30 %, de préférence au moins 50%, plus avantageusement au moins 100 % plus haut par rapport à l'autre desdits bourrelets.

26. Emballage selon la revendication 25, dans lequel le bourrelet est fait de matière fluée hors du sillon ménagé dans ladite couche (12).

27. Emballage selon la revendication 25 ou 26, dans lequel un deuxième sillon (433) formant une deuxième ligne de prédécoupe est ménagé dans ladite couche, le deuxième sillon s'étendant à distance le long du premier sillon, dans lequel l'unique bourrelet (55 ; 75) ou le bourrelet le plus haut de chacun des sillons est agencé le long du sillon du côté opposé à l'autre sillon, les deux lignes de prédécoupe étant de préférence distantes de 2 à 5 millimètres et les deux lignes étant aussi de préférence parallèles.

28. Emballage selon l'une quelconque des revendications 23 à 27, dans lequel chaque ligne de prédécoupe est ménagée dans la face du flanc vers l'intérieur de l'emballage.

29. Emballage selon l'une des revendications 23 à 28, **caractérisé en ce que** ladite couche en matière plastique est en polypropylène, le flanc comprenant de préférence aussi une couche en métal léger tel que de l'aluminium.

30. Emballage selon l'une quelconque des revendications 23 à 29, comprenant un deuxième flanc souple, le premier et le deuxième flanc étant liés par leurs bords latéraux et comprenant de préférence des soudures sur les bords latéraux.
